(19) Europäisches Patentamt / European Patent Office / Office européen des brevets

(11) **EP 4 756 903 A1**

(12) **EUROPEAN PATENT APPLICATION**

(43) Date of publication:
**10.06.2026  Bulletin 2026/24**

(21) Application number: **25218487.4**

(22) Date of filing: **25.11.2025**

(51) International Patent Classification (IPC):
**H01M 4/1391** *(2010.01)*   **H01M 4/04** *(2006.01)*
**H01M 4/36** *(2006.01)*   **H01M 4/62** *(2006.01)*
**H01M 4/02** *(2006.01)*   **H01M 4/525** *(2010.01)*

(52) Cooperative Patent Classification (CPC):
**H01M 4/1391; H01M 4/04; H01M 4/043;**
**H01M 4/366; H01M 4/625;** H01M 4/525;
H01M 2004/021; H01M 2004/028

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority:  **06.12.2024  KR 20240180787**

(71) Applicant: **SAMSUNG SDI CO., LTD.**
**Yongin-si, Gyeonggi-do 17084 (KR)**

(72) Inventors:
• **KIM, Teayeop**
  **17084 Yongin-si (KR)**
• **KIM, JinYoung**
  **17084 Yongin-si (KR)**
• **LEE, Jongjin**
  **17084 Yongin-si (KR)**
• **CHA, Minah**
  **17084 Yongin-si (KR)**
• **HWANG, Hoseong**
  **17084 Yongin-si (KR)**

(74) Representative: **Marks & Clerk LLP**
  **15 Fetter Lane**
  **London EC4A 1BW (GB)**

(54) **METHOD OF MANUFACTURING POSITIVE ELECTRODE ACTIVE MATERIAL, POSITIVE ELECTRODE ACTIVE MATERIAL MANUFACTURED USING THE SAME, AND RECHARGEABLE LITHIUM BATTERY CONTAINING THE POSITIVE ELECTRODE ACTIVE MATERIAL**

(57)   A method for manufacturing a positive electrode active material includes: (a) performing a first mixing process at a first shear rate to form a mixture of a lithium transition metal composite oxide and a graphene; and (b) performing a second mixing process at a second shear rate on the mixture, wherein (i) the first and the second mixing processes are performed using a mixer including a press head and a rotating chamber, and (ii) the second shear rate is greater than the first shear rate. Also disclosed is a positive electrode active material manufactured by the above method, and a rechargeable lithium battery including said positive electrode active material.

FIG. 11

| Preparing a lithium transition metal composite oxide | — S100 |

↓

| Performing a first mixing of the lithium transition metal composite oxide and graphene | — S320 |

↓

| Performing a second mixing of the mixture | — S340 |

↓

| Forming a slurry | — S500 |

↓

| Applying the slurry on a current collector, drying, and rolling | — S700 |

EP 4 756 903 A1

**Description**

**BACKGROUND**

**1. Field**

The present invention relates to a method for manufacturing a positive electrode (i.e., cathode) active material, a positive electrode active material manufactured using the same, and a rechargeable lithium battery including the cathode active material.

**2. Description of the Related Art**

Recently, with the rapid proliferation of battery-powered electronic devices (such as mobile phones and/or notebook computers) and/or electric vehicles, the demand for rechargeable batteries with high energy density and large capacity has significantly increased. In response, extensive research and development efforts have been made to enhance the performance of such rechargeable batteries, particularly rechargeable lithium batteries.

A rechargeable lithium battery generally includes a positive electrode, a negative electrode, and an electrolyte. Each of the positive electrode and the negative electrode contains an active material that is capable of lithium-ion intercalation and deintercalation. Electrical energy is generated through oxidation and reduction reactions as lithium ions move between the electrodes during charging and discharging. For example, during discharge, electrical energy is generated when lithium ions are intercalated into the positive electrode and/or deintercalated from the negative electrode.

**SUMMARY**

One or more aspects of the present invention are directed toward a method for manufacturing a positive electrode active material that manufactures the positive electrode active material with only relatively small power (e.g., consuming/utilizing less power) while minimizing or reducing damage and wear of the positive electrode active material. In addition, the method simplifies the process, shortens the time desired or required for the process, and economically manufactures the positive electrode active material. For example, the method operates with relatively low power consumption while minimizing damage and wear to the active material. Additionally, the method simplifies the manufacturing process, reduces processing time, and enables costeffective production of the positive electrode active material.

One or more aspects of the present invention are directed toward a positive electrode that has excellent or suitable conductivity and high mixture density.

One or more aspects of the present invention are directed toward a rechargeable lithium battery that has excellent or suitable energy density, capacity, charge-discharge efficiency, and high-temperature lifetime characteristics.

Additional aspects will be set forth in part in the description which follows and, in part, will be apparent from the description, or may be learned by practice of the presented embodiments of the invention.

According to a first aspect of the present invention there is provided a method for manufacturing a positive electrode active material including: (a) performing a first mixing process at a first shear rate to form a mixture of a lithium transition metal composite oxide and a graphene; and (b) performing a second mixing process at a second shear rate on the mixture, wherein (i) the first and the second mixing processes are performed using a mixer including a press head and a rotating chamber, (ii) the second shear rate is greater than the first shear rate, (iii) the first shear rate is defined by Equation 1, and (iv) the second shear rate is defined by Equation 2:

## Equation 1

$$\text{the first shear rate (s}^{-1}) = \text{a first rotational speed of rotating chamber/a first gap}$$

wherein in Equation 1, the first rotational speed is about 1,000 millimeter/second (mm/s) to about 6,000 mm/s, and the first gap is a first clearance space between the press head and an inner wall of the rotating chamber, and is greater than 0 mm and less than or equal to about 1 centimeter (cm); and

$$\text{the second shear rate (s}^{-1}) = \text{a second rotational speed of rotating chamber/a second gap} \qquad \text{Equation 2}$$

wherein in Equation 2, the second rotation speed is about 4,000 mm/s to about 18,000 mm/s, and the second gap is a second clearance space between the press head and the inner wall of the rotating chamber, and is greater than 0 mm and less than or equal to about 1 cm.

According to a second aspect of the present invention there is provided a positive electrode active material including: a core including a lithium transition metal composite oxide; and a carbon coating layer on a surface of the core, wherein the positive electrode active material is manufactured by the above-described method of the first aspect of the invention.

According to a third aspect of the present invention there is provided a rechargeable lithium battery including a positive electrode, a negative electrode, and a separator between the positive electrode and the negative electrode, wherein the positive electrode includes a current collector and a positive electrode active material layer on the current collector, and wherein the positive electrode active material layer includes the positive electrode active material described above according to the second aspect of the invention.

For example, the present invention provides a method for manufacturing a positive electrode active material that includes a two-stage mixing process utilizing a mixer including a press head and a rotating chamber. In the first stage, a lithium transition metal composite oxide and graphene are mixed at a first shear rate, defined as the ratio of a first rotational speed of the rotating chamber to a first gap between the press head and the inner wall of the chamber. In the second stage, the resulting mixture is subjected to a second mixing process at a higher shear rate, defined similarly using a second rotational speed and a second gap. The first and second shear rates are quantitatively defined by Equation 1 and Equation 2, respectively, and the specified ranges for rotational speeds and gaps ensure controlled shear conditions that enhance the dispersion and coating of graphene on the oxide particles. This method enables efficient energy use, reduces mechanical stress on the materials, and improves the uniformity and electrochemical performance of the resulting positive electrode active material. The method is for producing active materials with improved conductivity, mixture density, and compatibility with high-performance rechargeable lithium batteries.

At least some of the above and other features of the invention are set out in the claims.

## BRIEF DESCRIPTION OF DRAWINGS

The accompanying drawings are included to provide a further understanding of the disclosure, and are incorporated in and constitute a part of this disclosure. The drawings illustrate example embodiments of the disclosure and, together with the description, serve to explain principles of the disclosure. The above and other aspects, features, and advantages of certain embodiments of the present disclosure will be more apparent from the following description taken in conjunction with the accompanying drawings.

FIG. 1 is a schematic conceptual diagram of a rechargeable lithium battery according to one or more embodiments of the present disclosure.

FIGS. 2 - 5 are each a schematic views of a rechargeable lithium battery according to one or more embodiments of the present disclosure.

FIG. 6 is a cross-sectional view of a positive electrode according to one or more embodiments of the present disclosure.

FIG. 7 is an enlarged view of the area denoted 'M' of the positive electrode active material layer of FIG. 6 according to one or more embodiments of the present disclosure.

FIG. 8 is a cross-sectional view schematically illustrating a large particle of a positive electrode active material according to one or more embodiments of the present disclosure.

FIG. 9 is a cross-sectional view schematically illustrating a large particle of a positive electrode active material according to one or more embodiments of the present disclosure.

FIG. 10 is a cross-sectional view schematically illustrating a small particle of a positive electrode active material according to one or more embodiments of the present disclosure.

FIG. 11 is a flowchart for describing a method for manufacturing a positive electrode according to one or more embodiments of the present disclosure.

FIG. 12 - FIG. 15 are schematic diagrams each illustrating a step (e.g., act or task) of a method for manufacturing a positive electrode according to one or more embodiments of the present disclosure.

FIG. 16 is a scanning electron microscope (SEM) image of a surface of a positive electrode active material after the first mixing process during the manufacturing of the positive electrode active material according to Example 3 of the present disclosure.

FIG. 17 is a scanning electron microscope (SEM) image of a surface of a positive electrode active material after the second mixing process during the manufacturing of the positive electrode active material according to Example 3 of the present disclosure.

FIG. 18 is a graph showing the power (power consumption) plotted against the shear rate of a mixer during the manufacturing of positive electrode active materials according to Examples and Comparative Examples of the present disclosure.

## DETAILED DESCRIPTION

To fully understand the configuration and effects of the present disclosure, one or more example embodiments will be described with reference to the accompanying drawings. However, the present disclosure is not limited to the following example embodiments and may be implemented in one or more suitable forms. The example embodiments are provided solely to illustrate the present disclosure and to enable those skilled in the art to fully understand its scope.

In this disclosure, if (e.g., when) an element is described as being "on" another element, it may be directly on the other element, or one or more intervening elements may be present therebetween. In contrast, if (e.g., when) an element is referred to as being "directly on" another element, there are no intervening elements present therebetween. In the drawings, certain thicknesses may be exaggerated to better illustrate technical details. Throughout the specification, like reference numerals indicate like elements, and duplicative descriptions thereof may not be provided for conciseness.

One or more embodiments described herein may be illustrated using sectional and/or plan views, which are presented as idealized and illustrative examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe one or more suitable elements, these terms are merely used for distinction and do not imply any particular order or hierarchy. For example, a first element discussed herein could be termed a second element, without departing from the scope of the disclosure. The embodiments described and illustrated herein include complementary variations.

The terms used in this disclosure serve only to explain one or more suitable embodiments and are not intended to limit the present disclosure. Unless explicitly stated otherwise, singular forms may also include plural forms. The terms "comprise(s)/include(s)" and/or "comprising/including" and/or "has(have)/having" do not exclude the presence or addition of one or more other components. Additionally, the terms "comprise(s)/comprising," "include(s)/including," "has(have)/-having", or other similar terms include or support the terms "consisting of" and "consisting essentially of," indicating the presence of stated features, numbers, steps, operations, elements, parts, and/or components, without or essentially without the presence of other features, numbers, steps, operations, elements, parts, components, and/or groups thereof. Further, the utilization of "may" when describing embodiments of the present disclosure refers to "one or more embodiments of the present disclosure".

In this disclosure, the phrase "combination thereof" may refer to a mixture, a stack, a composite, a copolymer, an alloy, a blend, or a reaction product of constituents.

Unless otherwise specifically defined, the term "particle diameter" or "particle size" refers to an average particle diameter/size. The particle diameter/size may represent the median particle size (D50), which corresponds to the diameter/size of particles at 50 vol% in a cumulative particle size distribution. In other words, D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. The average particle diameter/size (D50) may be measured using widely suitable methods, such as a particle size analyzer, for example, HORIBA, LA-950 laser particle size analyzer, or by using transmission electron microscope (TEM) imaging, or scanning electron microscope (SEM) imaging. In one or more embodiments, dynamic light scattering (DLS) may be used, where particle counts within size ranges are analyzed to calculate the average particle diameter/size (D50). In one or more embodiments, a laser scattering method may be employed, in which target particles are dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution. In the present disclosure, when particles are spherical, "diameter/size" indicates an average particle diameter/size, and when the particles are non-spherical, the "diameter/size" indicates an average major axis length of particles.

Herein, the term "single particle" may indicate a single type (kind) of particle having no grain boundary inside thereof. The single particle may indicate one single particle morphologically present in an independent phase in which particles are not aggregated (e.g., agglomerated) with one another, a particle having a monolith structure, a particle having a one-body structure, or a non-aggregated (e.g., nonagglomerated) particle. For example, the single particle may be a single crystal. In one or more embodiments, the single particle may be a particle containing several crystals. The single particle may be in an isolated form or may be in a form in which less than 10 single particles are attached to one another.

In the disclosure, the phrases "A or B," "A and/or B," "A/B," "at least one of A and B," "at least one of A or B," "A, B, or C," "at least one of A, B, and C," and "at least one of A, B, or C" include any one or all possible combinations of the listed elements.

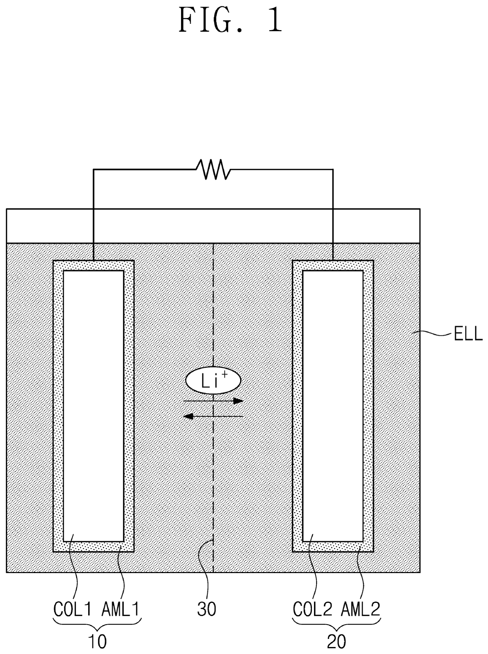

FIG. 1 is a schematic conceptual diagram of a rechargeable lithium battery according to one or more embodiments of the present disclosure. Referring to FIG. 1, a rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other by the separator 30. The separator 30 may be arranged between the positive electrode 10 and the negative electrode 20. The positive electrode 10, the negative electrode 20, and the separator 30 may be in contact with the electrolyte solution ELL. For example, the positive electrode 10, the negative electrode 20, and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

The positive electrode 10 for a rechargeable lithium battery may include a current collector COL1 and a positive electrode active material layer AML1 on the current collector COL1. The positive electrode active material layer AML1 may include a positive electrode active material (e.g., in a form of particles) and may further include a binder and/or a conductive material (e.g., an electrically conductive material, e.g., an electron conductor).

In one or more embodiments, the positive electrode 10 may further include an additive that may serve as a sacrificial positive electrode.

An amount of the positive electrode active material may be about 90 wt% to about 99.5 wt% based on a total weight of 100 wt% of the positive electrode active material layer AML1. Amounts of the binder and the conductive material may each be about 0.5 wt% to about 5 wt%, based on the total weight of 100 wt% of the positive electrode active material layer AML1.

The binder serves to attach the positive electrode active material particles well to each other and also to attach the positive electrode active material well to the current collector COL1. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, as non-limiting examples.

The conductive material (e.g., an electrically conductive material) may be used to impart conductivity (e.g., electrical conductivity) to the electrode. Any material that does not cause chemical change (e.g., does not cause an undesirable chemical change in the rechargeable lithium battery) and conducts electrons may be used in the battery. Non-limiting examples of the conductive material may include a carbon-based material such as natural graphite, artificial graphite, carbon black, acetylene black, Ketjen black, a carbon fiber, a carbon nanofiber, and carbon nanotube; a metal-based material containing copper, nickel, aluminium, silver, and/or the like, in a form of a metal powder or a metal fiber; a conductive polymer such as a polyphenylene derivative; or a mixture thereof.

In one or more embodiments, aluminium (Al) may be used as the current collector COL1, but embodiments of the present disclosure are not limited thereto.

## Positive Electrode Active Material

The positive electrode active material may include a compound (lithiated intercalation compound) that is capable of intercalating and deintercalating lithium. For example, in one or more embodiments, at least one of a composite oxide of lithium and a metal selected from among cobalt, manganese, nickel, and a combination thereof may be used.

The composite oxide may be a lithium transition metal composite oxide. Non-limiting examples of the composite oxide may include lithium nickel-based oxide(s), lithium cobalt-based oxide(s), lithium manganese-based oxide(s), lithium iron phosphate-based compound(s), cobalt-free nickel-manganese-based oxide(s), and/or a combination thereof.

In one or more embodiments, one or more compounds represented by any one selected from among the following Chemical Formulae may be used:

$Li_aA_{1-b}X_bO_{2-c}D_c$ (0.90≤a≤1.8, 0≤b≤0.5, and 0≤c≤0.05); $Li_aMn_{2-b}X_bO_{4-c}D_c$ (0.90≤a≤1.8, 0≤b≤0.5, and 0≤c≤0.05); $Li_aNi_{1-b-c}Co_bX_cO_{2-\alpha}D_\alpha$ (0.90≤a≤1.8,0≤b≤0.5, 0≤c≤0.5, and 0<α<2); $Li_aNi_{1-b-c}Mn_bX_cO_{2-\alpha}D_\alpha$ (0.90≤a≤1.8,0≤b≤0.5, 0≤c≤0.5, and 0<α<2);
$Li_aNi_bCo_cL^1_dG_eO_2$ (0.90≤a≤1.8,0≤b≤0.9, 0≤c≤0.5, 0≤d≤0.5, and 0≤e≤0.1); $Li_aNiG_bO_2$ (0.90≤a≤1.8 and 0.001≤b≤0.1); $Li_aCoG_bO_2$ (0.90≤a≤1.8 and 0.001≤b≤0.1);
$Li_aMn_{1-b}G_bO_2$ (0.90≤a≤1.8 and 0.001≤b≤0.1); $Li_aMn_2G_bO_4$ (0.90≤a≤1.8 and 0.001≤b≤0.1); $Li_aMn_{1-g}G_gPO_4$ (0.90≤a≤1.8 and 0≤g≤0.5); $Li_{(3-f)}Fe_2(PO_4)_3$ (0≤f≤2); and
$Li_aFePO_4$ (0.90≤a≤1.8).

In the foregoing Chemical Formulae, A may be nickel (Ni), cobalt (Co), manganese (Mn), or a combination thereof; X may be Al, Ni, Co, Mn, chromium (Cr), iron (Fe), magnesium (Mg), strontium (Sr), vanadium (V), a rare earth element, or a combination thereof; D may be oxygen (O), fluorine (F), sulfur (S), phosphorus (P), or a combination thereof; G may be Al, Cr, Mn, Fe, Mg, lanthanum (La), cerium (Ce), Sr, V, or a combination thereof; and $L^1$ may be Mn, Al, or a combination thereof.

In one or more embodiments, the positive electrode active material may be, for example, a high nickel-based positive electrode active material having a nickel amount of greater than or equal to about 80 mol%, greater than or equal to about 85 mol%, greater than or equal to about 90 mol%, greater than or equal to about 91 mol%, or greater than or equal to about 94 mol%, and less than or equal to about 99 mol% based on 100 mol% of a total metal excluding lithium in the lithium transition metal composite oxide. The high-nickel-based positive electrode active material may be capable of realizing high capacity and may be applied to a high-capacity and highdensity rechargeable lithium battery.

**Negative Electrode 20**

The negative electrode 20 for a rechargeable lithium battery may include a current collector COL2 and a negative electrode active material layer AML2 on the current collector COL2. The negative electrode active material layer AML2 may include a negative electrode active material (e.g., in a form of particles), and may further include a binder and/or a conductive material (e.g., an electrically conductive material).

For example, in one or more embodiments, the negative electrode active material layer AML2 may include about 90 wt% to about 99.5 wt% of the negative electrode active material, about 0.5 wt% to about 5 wt% of the binder, and about 0 wt% to about 5 wt% of the conductive material, based on a total weight of 100 wt% of the negative electrode active material layer.

The binder may serve to attach the negative electrode active material particles well to each other and also to attach the negative electrode active material well to the current collector COL2. The binder may include a non-aqueous (e.g., waterinsoluble) binder, an aqueous (e.g., water-soluble) binder, a dry binder, or a combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the binder of the negative electrode, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material (e.g., electrically conductive material) may be used to impart conductivity (e.g., electrical conductivity) to the electrode. Any material that does not cause chemical change (e.g., does not cause an undesirable chemical change in the rechargeable lithium battery) and that conducts electrons may be used in the battery. Non-limiting examples thereof may include a carbon-based material such as natural graphite, artificial graphite, carbon black, acetylene black, Ketjen black, a carbon fiber, a carbon nanofiber, and a carbon nanotube; a metal-based material including copper, nickel, aluminium, silver, and/or the like, in a form of a metal powder or a metal fiber; a conductive polymer such as a polyphenylene derivative; and/or a mixture thereof.

The current collector COL2 may include a copper foil, a nickel foil, a stainless-steel foil, a titanium foil, a nickel foam, a copper foam, a polymer substrate coated with a conductive metal, or a combination thereof.

**Negative Electrode Active Material**

The negative electrode active material in the negative electrode active material AML2 may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, such as, for example, crystalline carbon, amorphous carbon, or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may include Sn, $SnO_k$ ($0 < k \leq 2$) (e.g., $SnO_2$), a Sn-based alloy, or a combination thereof.

The silicon-carbon composite (e.g., in a form of particles) may be a composite of silicon and amorphous carbon. According to one or more embodiments, the silicon-carbon composite may be in a form of silicon particles and amorphous carbon coated on a surface of each of the silicon particles. For example, in one or more embodiments, the silicon-carbon composite may include a secondary particle (core) in which primary silicon particles are assembled, and an amorphous carbon coating layer (shell) on a surface of the secondary particle. The amorphous carbon may also be between the primary silicon particles, and, for example, the primary silicon particles may each be coated with the amorphous carbon. The secondary particle may exist dispersed in an amorphous carbon matrix.

In one or more embodiments, the silicon-carbon composite may further include crystalline carbon. For example, the silicon-carbon composite may include a core including crystalline carbon and silicon particles, and an amorphous carbon coating layer on a surface of the core.

In one or more embodiments, the Si-based negative electrode active material and/or the Sn-based negative electrode active material may be used in combination with a carbon-based negative electrode active material.

**Separator 30**

Depending on the type (kind) of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, for example, a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator 30 may include a porous substrate and a coating layer including an organic material, an inorganic material, or a combination thereof on one or both (e.g., simultaneously) surfaces (e.g., two opposite surfaces) of the porous substrate.

The porous substrate may be a polymer film formed of any one selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The organic material may include a polyvinylidene fluoride-based polymer or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but embodiments of the present disclosure are not limited thereto.

In one or more embodiments, the organic material and the inorganic material may be mixed in one coating layer, or a coating layer including an organic material and a coating layer including an inorganic material may be stacked.

**Electrolyte ELL**

The electrolyte solution ELL for a rechargeable lithium battery may include a non-aqueous organic solvent and a lithium salt.

The non-aqueous organic solvent may serve as a medium for transmitting ions taking part in an electrochemical reaction of the rechargeable lithium battery.

The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 and linear, branched, or cyclic hydrocarbon group, and may include a double bond, an aromatic ring, or an ether bond), and/or the like; amides such as dimethylformamide; dioxolanes such as 1,3-dioxolane, 1,4-dioxolane, and/or the like; sulfolanes; and/or the like.

The non-aqueous organic solvents may be used alone or in combination of two or more thereof.

In addition, if (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The lithium salt dissolved in the non-aqueous organic solvent supplies lithium ions in the rechargeable lithium battery, enables a basic operation of the rechargeable lithium battery, and improves transportation of the lithium ions between the positive electrode and the negative electrode. Non-limiting examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

**Rechargeable lithium battery**

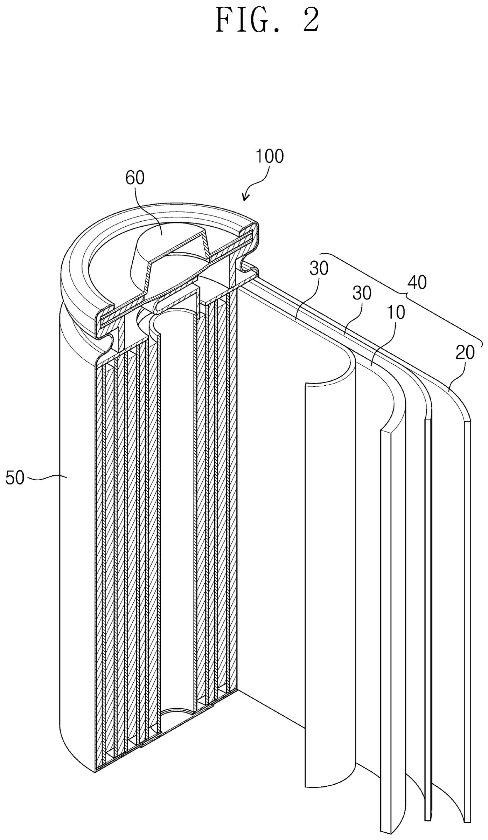

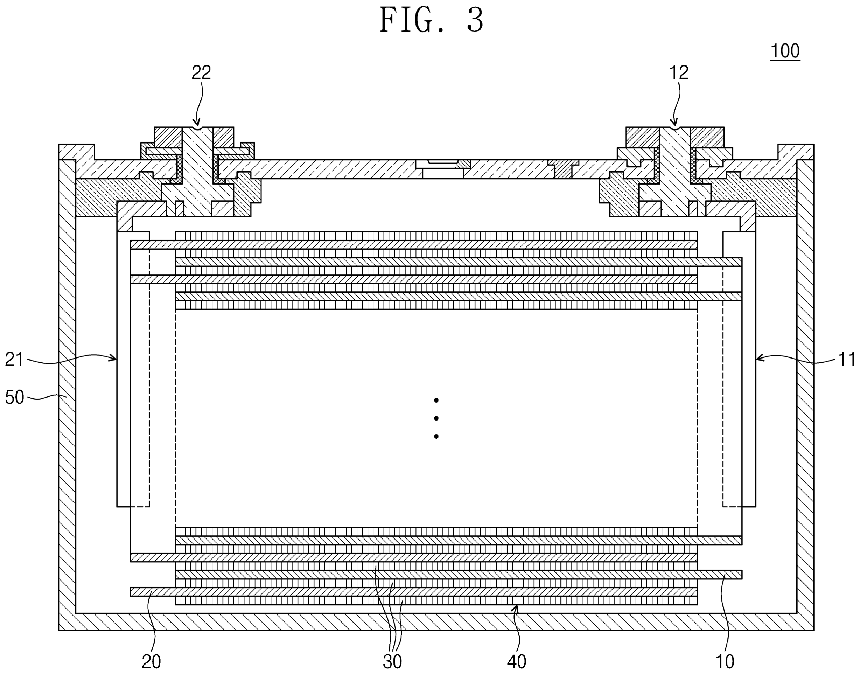

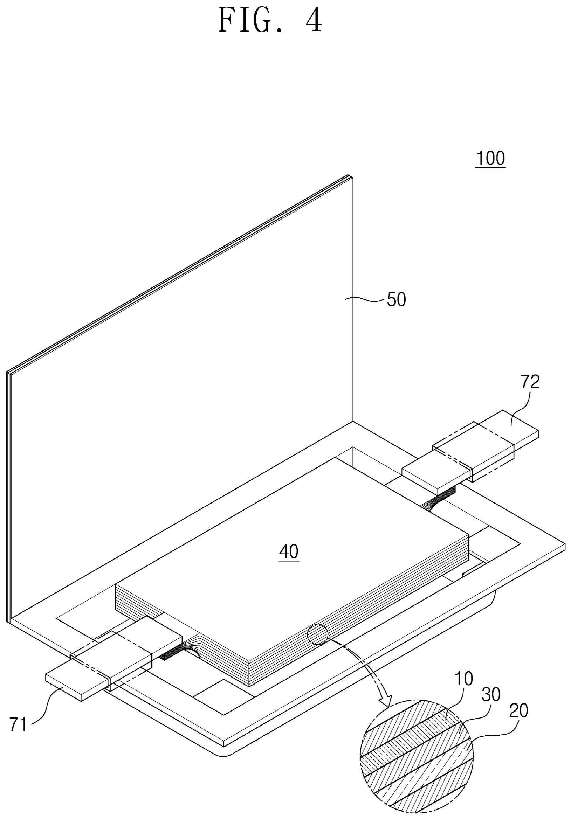

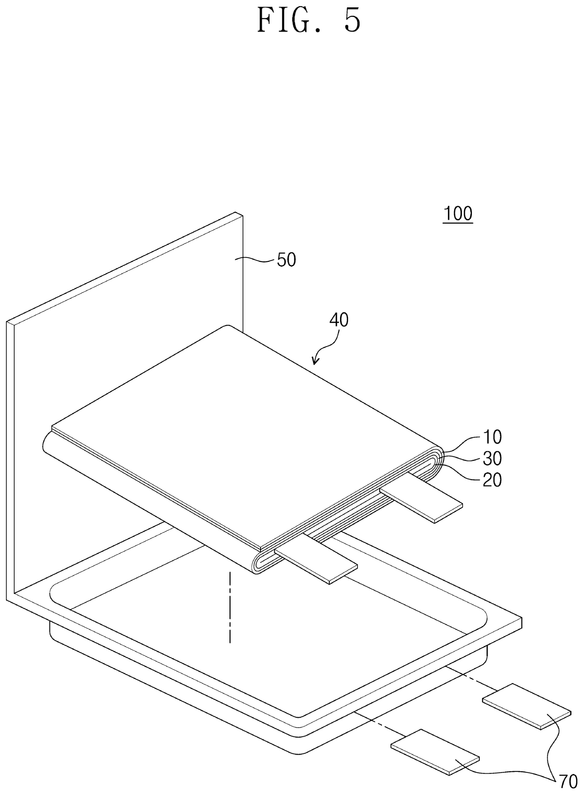

The rechargeable lithium battery may be classified into a cylindrical, prismatic, pouch, or coin-type (kind) battery, and/or the like depending on its shape. FIGS. 2 to 5 are schematic views each illustrating a rechargeable lithium battery according to one or more embodiments of the present disclosure. FIG. 2 shows a cylindrical battery, FIG. 3 shows a prismatic battery, and FIGS. 4 and 5 show pouchtype (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. In one or more embodiments, the rechargeable lithium battery 100 may include a sealing member 60 sealing the case 50, as shown in FIG. 2. In one or more embodiments, as shown in FIG. 3, the rechargeable lithium battery 100 may include a positive lead tab 11, a positive terminal 12, a negative lead tab 21, and a negative terminal 22. In one or more embodiments, as shown in FIGS. 4 and 5, the rechargeable lithium battery 100 may include an electrode tab 70, which may be, for example, a positive electrode tab 71 and a negative electrode tab 72, serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

Hereinafter, the positive electrode 10 of the present disclosure will be described in more detail.

**Positive electrode 10**

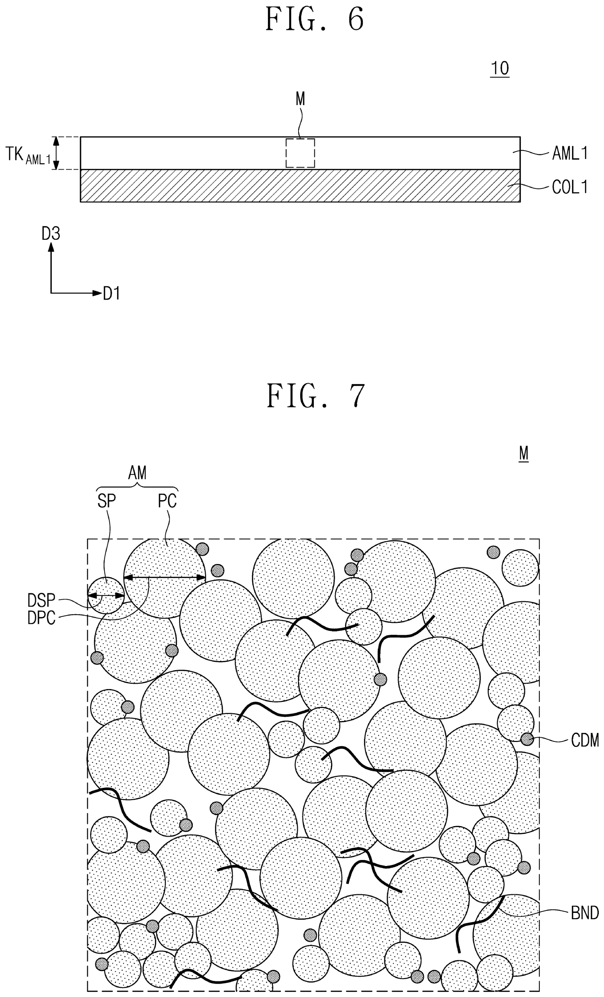

FIG. 6 is a cross-sectional view of a positive electrode 10 according to one or more embodiments of the present disclosure. FIG. 7 is an enlarged view of the region M in FIG. 6 according to one or more embodiments. Hereinafter, for convenience of description, description of the same matters as those described with reference to FIGS. 1 to 5 will not be repeated and provided, and only differences will be described in more detail.

Referring to FIG. 6 and FIG. 7, a positive electrode 10 according to one or more embodiments of the present disclosure includes a current collector COL1 and a positive electrode active material layer AML1 formed on the current collector COL1. The positive electrode active material layer AML1 contains a positive electrode active material AM (e.g., in a form of particles), and may further contain a binder BND and/or a conductive material CDM. The description of the binder BND may refer to the description of the binder provided above.

A thickness $TK_{AML1}$ of the positive electrode active material layer AML1 may be about 20 micrometers ($\mu$m) to about 100 $\mu$m. For example, the thickness $TK_{AML1}$ of the positive electrode active material layer AML1 may be about 20 $\mu$m or more, about 30 $\mu$m or more, about 40 $\mu$m or more, or about 50 $\mu$m or more. For example, the thickness $TK_{AML1}$ of the positive electrode active material layer AML1 may be about 100 $\mu$m or less, about 90 $\mu$m or less, about 80 $\mu$m or less, about 70 $\mu$m or less, or about 60 $\mu$m or less.

An amount of the positive electrode active material AM in the positive electrode active material layer AML1 may be about 90 wt% to about 99.5 wt% with respect to (e.g., based on) a total weight of 100 wt% of the positive electrode active material layer AML1. For example, the amount of the positive electrode active material AM in the positive electrode active material layer AML1 may be about 90 wt% or more, about 95 wt% or more, about 96 wt% or more, or about 97 wt% or more, based on the total weight of 100 wt% of the positive electrode active material layer AML1. For example, the amount of the positive electrode active material AM in the positive electrode active material layer AML1 may be equal to or greater than about 90 wt% and about 99.5 wt% or less, about 99 wt% or less, or about 98.5 wt% or less, based on the total weight of 100 wt% of the positive electrode active material layer AML1.

The conductive material CDM may include, for example, the above-described carbon-based material. For example, the carbon-based material may include at least one selected from the group consisting of natural graphite, artificial graphite, carbon black, acetylene black, Ketjen black, carbon fiber, carbon nanofiber, and carbon nanotube. The conductive material CDM may improve adhesion between positive electrode active materials AMs.

In one or more embodiments, the carbon-based material constituting the conductive material CDM may be a single particle, or may be an assembly having a secondary particle form in which primary particles are assembled. If (e.g., when) the carbon-based material is a single particle (e.g., in a form of single particle), the average particle diameter of the carbon-based material may be about 100 nanometers (nm) or less, for example, about 10 nm to about 100 nm.

If (e.g., when) the carbon-based material is an assembly, a particle diameter (e.g., average particle diameter) of the primary particles may be about 20 nm to about 100 nm, and a particle diameter (e.g., average particle diameter) of the secondary particle may be about 1 $\mu$m to about 20 $\mu$m.

For example, in one or more embodiments, the average particle size of the primary particles may be about 20 nm or more, about 30 nm or more, about 40 nm or more, about 50 nm or more, about 60 nm or more, about 70 nm or more, about 80 nm or more, or about 90 nm or more, and may be about 100 nm or less, about 90 nm or less, about 80 nm or less, about 70 nm or less, about 60 nm or less, about 50 nm or less, about 40 nm or less, or about 30 nm or less.

For example, the average particle size of the secondary particle may be about 1 $\mu$m or more, about 3 $\mu$m or more, about 5 $\mu$m or more, about 7 $\mu$m or more, about 10 $\mu$m or more, or about 15 $\mu$m or more, and may be about 20 $\mu$m or less, about 15 $\mu$m or less, about 10 $\mu$m or less, about 7 $\mu$m or less, about 5 $\mu$m or less, or about 3 $\mu$m or less.

In one or more embodiments, the carbon-based material constituting the conductive material CDM may have a one-dimensional nanostructure. A one-dimensional nanostructure may be defined as, for example, a structure in which the size of any one of the three dimensions is larger than the size of the other two dimensions. For example, in one or more embodiments, the one-dimensional nanostructure may be defined as a nanostructure in which a length of the nanostructure is much larger than a diameter or a width and a thickness of the nanostructure.

The carbon-based material having a one-dimensional nanostructure may have a length of about 1 $\mu$m to about 200 $\mu$m. For example, the carbon-based material may have a length of about 5 $\mu$m to about 50 $\mu$m. In one or more embodiments, the carbon-based material may have an average length of about 5 $\mu$m to about 50 $\mu$m.

An aspect ratio of the carbon-based material having a one-dimensional nanostructure may be about 10 to about 3000. For example, in one or more embodiments, the aspect ratio of the carbon-based material may be about 10 to about 2600, about 20 to about 2500, or about 30 to about 2400. The aspect ratio may be calculated as a ratio of the length of the carbon-based material to the diameter of the carbon-base material.

When the length and the aspect ratio of the carbon-based material satisfy the ranges described above, the positive electrode active material AM may be connected to each other, and a sufficient contact area between the positive electrode active materials AMs may be secured.

For example, the size, structure, and length of the carbon-based material constituting the conductive material CDM may be confirmed through scanning electron microscopy (SEM), transmission electron microscopy (TEM), atomic force microscopy (AFM), and/or the like.

For example, the carbon-based material constituting the conductive material CDM may be identified through Raman spectroscopy. For example, in the case of a carbon-based material having a one-dimensional nanostructure, a radical breathing mode (RBM) peak may appear in a range of about 70 cm$^{-1}$ to about 300 cm$^{-1}$ in a Raman spectrum for the conductive material CDM. For example, in the case of a carbon-based material having a one-dimensional nanostructure, a G$^{-}$-band and a G$^{+}$-band may appear in a Raman spectrum for the conductive material CDM.

For example, the carbon-based material constituting the conductive material CDM may be identified through X-ray photoelectron spectroscopy (XPS). In the XPS spectrum, a peak corresponding to a carbon-carbon covalent bond may be mainly observed on the surface of the conductive material CDM. In addition, a result of XPS analysis may show few peaks corresponding to carbon-oxygen covalent bonds on the surface of the conductive material CDM.

An amount of the conductive material CDM may be about 0.5 wt% to about 2 wt% with respect to (e.g., based on) the total weight of 100 wt% of the positive electrode active material layer AML1. For example, in one or more embodiments, the amount of the conductive material CDM may be about 0.5 wt% to about 1.5 wt%, or 0.5 wt% to about 1 wt% with respect to the total weight of 100 wt% of the positive electrode active material layer AML1.

In one or more embodiments, a weight ratio of the conductive material CDM to the positive electrode active material AM may be about 1/99.5 to about 1/97. For example, the weight ratio of the conductive material CDM to the positive electrode active material AM may be about 1/99.5 or more, about 1/99 or more, about 1/98.5 or more, or about 1/98 or more. For example, the weight ratio of the conductive material CDM to the positive electrode active material AM may be about 1/97 or less, or about 1/97.5 or less.

Because the positive electrode 10 may contain the positive electrode active material AM of one or more embodiments, the amount of the conductive material CDM in the electrode plate may be reduced. In addition, the positive electrode 10 may have excellent or suitable conductivity and may be implemented to have a high mixture density. Accordingly, a rechargeable lithium battery having excellent or suitable energy density, capacity, charge-discharge efficiency, and high-temperature life characteristics may be provided.

Hereinafter, the positive electrode active material AM will be described in more detail.

**Positive Electrode Active Material (AM)**

Referring to FIG. 7, the positive electrode active material AM may include at least one of a large particle PC or a small particle SP. For example, in one or more embodiments, the positive electrode active material AM may include the large particle PC. For example, in one or more embodiments, the positive electrode active material AM may include the small particle SP. For example, in one or more embodiments, the positive electrode active material AM may include the large particle PC and the small particle SP.

An average particle diameter DPC (e.g. $D50_{PC}$) of the large particle PC may be larger than an average particle diameter DSP (e.g. $D50_{SP}$) of the small particle SP. For example, in one or more embodiments, the average particle diameter DPC ($D50_{PC}$) of the large particle PC may be about 6.0 $\mu$m to about 25 $\mu$m, about 10 $\mu$m to about 25 $\mu$m, or about 10 $\mu$m to about 20 $\mu$m. For example, the average particle diameter DSP (e.g. $D50_{SP}$) of the small particle SP may be about 1.0 $\mu$m to about 6.0 $\mu$m, about 2.0 $\mu$m to about 5.0 $\mu$m, or about 3.0 $\mu$m to about 5.0 $\mu$m.

For example, the average particle diameter D50 may be obtained by arbitrarily selecting each of about 30 large particles PCs and 30 small particles SPs in an electron micrograph of the positive electrode 10 or the positive electrode active material AM, measuring their particle diameters, and taking the diameter of particles having a cumulative volume of 50 vol% in the particle size distribution as the average particle diameter. As another example, the average particle diameter may be measured by a particle size analyzer, and the diameter of particles having a cumulative volume of 50 vol% in the particle size distribution may be taken as the average particle diameter.

The positive electrode active material AM according to one or more embodiments of the present disclosure may be in a bimodal form including the large particle PC and the small particle SP having different average particle diameters. The small particle SP may fill the voids between the large particle PC, improving the packing density of the positive electrode active material layer AML1. For example, the positive electrode active material layer AML1 according to one or more embodiments of the present disclosure may have relatively high energy density and high capacity per unit volume.

For example, a weight ratio of the large particle PC to the small particle SP may be about 95:5 to about 50:50. For example, in one or more embodiments, the weight ratio of the large particle PC to the small particle SP may be about 90:10 to about 60:40, about 90:10 to about 70:30, or about 80:20 to about 70:30. In one or more embodiments, the weight ratio of the large particle PC to the small particle SP may be about 5:95 to about 50:50. For example, in one or more embodiments, an amount of the large particle PC may be greater than an amount of the small particle SP in the positive electrode active material AM.

For example, in one or more embodiments, the positive electrode active material AM may include only the large particle PC. For example, the small particle SP may not be provided.

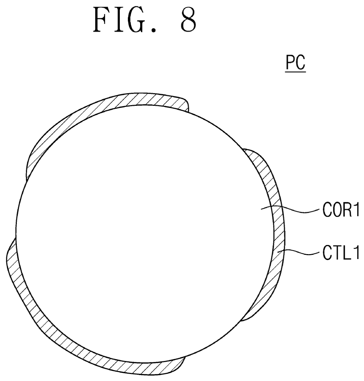

FIG. 8 is a cross-sectional view schematically illustrating a large particle PC of a positive electrode active material according to one or more embodiments of the present disclosure. Referring to FIG. 8, a large particle PC according to one or more embodiments of the present disclosure includes a core COR1 and a carbon coating layer CTL1. The core COR1 of the large particle PC may be in the form of a single particle having no grain boundary inside thereof. The single particle may indicate one single particle morphologically present in an independent phase in which particles are not aggregated (e.g., agglomerated) with one another, a particle having a monolith structure, a particle having a one-body structure, or a non-aggregated (e.g., nonagglomerated) particle. For example, the single particle may be a single crystal. In one or more embodiments, the large particle PC may be spherical or elliptical. In one or more embodiments, the large particle PC may be polyhedral or irregular.

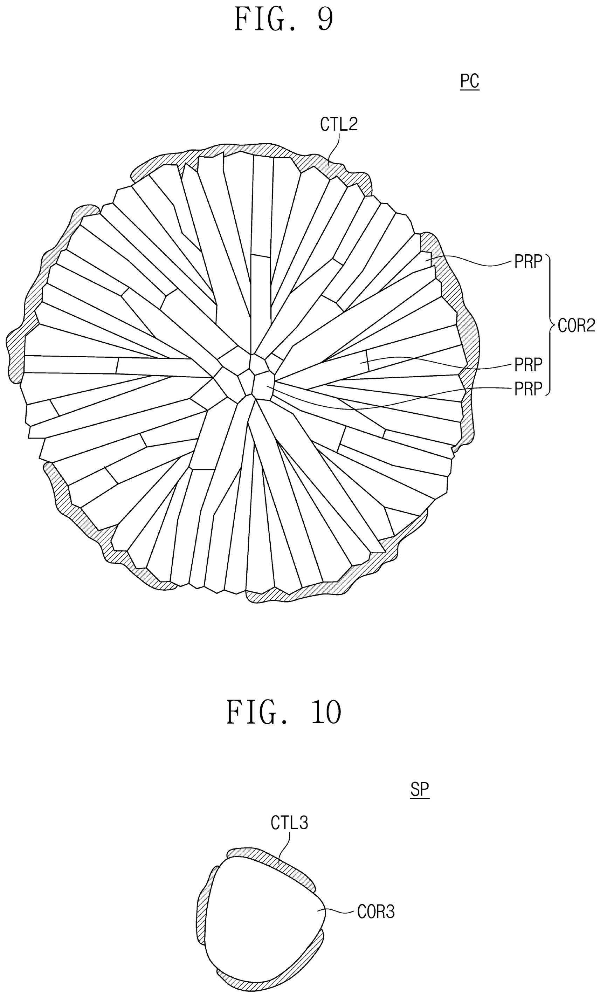

FIG. 9 is a cross-sectional view schematically illustrating a large particle PC of a positive electrode active material according to one or more embodiments of the present disclosure. Referring to FIG. 9, a large particle PC according to one or more embodiments of the present disclosure includes a core COR2 and a carbon coating layer CTL2. The core COR2 of the large particle PC may be in a polycrystalline form (e.g., in a form of polycrystalline), and may include (e.g., be) a secondary particle in which at least two or more primary particles PRP are aggregated (e.g., agglomerated). The large particle PC may be spherical or elliptical.

FIG. 10 is a cross-sectional view schematically illustrating a small particle SP of a positive electrode active material according to one or more embodiments of the present disclosure. Referring to FIG. 10, a small particle SP according to one or more embodiments of the present disclosure includes a core COR3 and a carbon coating layer CTL3. The core COR3 of the small particle SP may be in the form of a single particle having no grain boundary inside thereof. The single particle may indicate one single particle morphologically present in an independent phase in which particles are not aggregated (e.g., agglomerated) with one another, a particle having a monolith structure, a particle having a one-body structure, or a non-aggregated (e.g., nonagglomerated) particle. For example, the single particle may be a single crystal. The positive electrode active material AM may include the small particle SP, so that high capacity, high energy density, and improved lifetime characteristics may be achieved.

Referring to FIGS. 8 to 10, in one or more embodiments, the cores COR1 and COR2 of the large particle PC and the core COR3 of the small particle SP each includes a lithium transition metal composite oxide. For the cores COR1, COR2, and COR3, a compound capable of reversible intercalation and deintercalation of lithium (a lithiated intercalation compound) may be used. For example, in one or more embodiments, one or more kinds of composite oxides of lithium and a metal selected from among cobalt, manganese, nickel, and a combination thereof may be used.

The composite oxide is a lithium transition metal composite oxide, and non-limiting examples thereof may include a lithium nickel-based oxide, a lithium cobalt-based oxide, a lithium manganese-based oxide, a lithium iron phosphate-based compound, a cobalt-free nickel-manganese-based oxide, or a combination thereof. Specific examples of the composite oxide are as described above.

For example, the lithium nickel-based oxide may be a lithium nickel-based oxide containing a high amount of nickel (Ni). For example, the lithium nickel-based oxide may be a lithium nickel-based oxide in which the amount of nickel (Ni) based on a total metal excluding lithium is about 60 mol% or more, about 80 mol% or more, about 90 mol% or more, or about 91 mol% or more, and 100 mol% or less, about 99.9 mol% or less, or about 99 mol% or less. For example, the lithium nickel-based oxide may be a lithium nickel-based oxide in which the number of moles of nickel (Ni) relative to the total number of moles of the transition metals is about 60 mol% or more, about 80 mol% or more, about 90 mol% or more, or about 91 mol% or more, and 100 mol% or less, about 99.9 mol% or less, or about 99 mol% or less. When the amount of nickel (Ni) satisfies the above-described range, the positive electrode active material AM may achieve high capacity and high performance.

For example, in one or more embodiments, the lithium transition metal composite oxide constituting the cores COR1, COR2, and COR3 may be represented by the Chemical Formula 1.

### Chemical Formula 1 $\quad Li_{a1}Ni_{x1}M1_{y1}M^2_{z1}O_{2-b1}X_{b1}$

In Chemical Formula 1, $0.9 \leq a1 \leq 1.8$, $0.8 \leq x1 \leq 1$, $0 \leq y1 \leq 0.2$, $0 \leq z1 \leq 0.2$, $0.9 \leq x1+y1+z1 \leq 1.1$, and $0 \leq b1 \leq 0.1$, $M^1$ and $M^2$ may each independently be one or more elements selected from the group consisting of aluminium (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), strontium (Sr), titanium (Ti), vanadium (V), tungsten (W), and zirconium (Zr), and X may be one or more elements selected from the group including (e.g., consisting of) fluorine (F), phosphorus (P), and sulfur (S).

For example, in one or more embodiments, in Chemical Formula 1, $0.85 \leq x1 \leq 1$, $0 \leq y1 \leq 0.15$, and $0 \leq z1 \leq 0.15$ may be satisfied, or $0.9 \leq x1 \leq 1$, $0 \leq y1 \leq 0.1$, and $0 \leq z1 \leq 0.1$ may be satisfied.

For example, $x1+y1+z1=1$.

For example, in one or more embodiments, the lithium transition metal composite oxide constituting the cores COR1, COR2, and COR3 may be represented by Chemical Formula 2. The compound represented by Chemical Formula 2 may be a lithium nickel cobalt-based composite oxide.

### Chemical Formula 2 $\quad Li_{a2}Ni_{x2}Co_{y2}M^3_{z2}O_{2-b2}X_{b2}$

In Chemical Formula 2, $0.9 \leq a2 \leq 1.8$, $0.8 \leq x2 < 1$, $0 < y2 \leq 0.2$, $0 \leq z2 \leq 0.2$, $0.9 \leq x2+y2+z2 \leq 1.1$, and $0 \leq b2 \leq 0.1$, $M^3$ may be one or more elements selected from the group consisting of Al, B, Ba, Ca, Ce, Cr, Fe, Mg, Mn, Mo, Nb, Si, Sr, Ti, V, W, and Zr, and X may be one or more elements selected from the group including (e.g., consisting of) F, P, and S.

For example, in one or more embodiments, in Chemical Formula 2, $0.85 \leq x2 \leq 0.99$, $0.01 \leq y2 \leq 0.15$, and $0.01 \leq z2 \leq 0.15$, or $0.9 \leq x2 \leq 0.99$, $0.01 \leq y2 \leq 0.1$, and $0.01 \leq z2 \leq 0.1$ may be satisfied.

For example, $x2+y2+z2=1$.

For example, in one or more embodiments, the lithium transition metal composite oxide constituting the cores COR1, COR2, and COR3 may be represented by Chemical Formula 3. The compound represented by Chemical Formula 3 may be a lithium nickel cobalt aluminium oxide or a lithium nickel cobalt manganese oxide.

### Chemical Formula 3 $\quad Li_{a3}Ni_{x3}Co_{y3}M^4_{z3}M^5_{w3}O_{2-b3}X_{b3}$

In Chemical Formula 3, $0.9 \leq a3 \leq 1.8$, $0.8 \leq x3 \leq 0.98$, $0.01 \leq y3 \leq 0.19$, $0.01 \leq z3 \leq 0.19$, $0 \leq w3 \leq 0.19$, $0.9 \leq x3+y3+z3+w3 \leq 1.1$, and $0 \leq b3 \leq 0.1$, $M^4$ may be one or more elements selected from the group consisting of Al and Mn, $M^5$ may be one or more elements selected from the group including (e.g., consisting of) B, Ba, Ca, Ce, Cr, Fe, Mg, Mo, Nb, Si, Sr, Ti, V, W, and Zr, and X may be one or more elements selected from among the group of F, P and S.

For example, in one or more embodiments, in Chemical Formula 3, $0.85 \leq x3 \leq 0.98$, $0.01 \leq y3 \leq 0.14$, $0.01 \leq z3 \leq 0.14$,

and $0 \leq w3 \leq 0.14$, or $0.9 \leq x3 \leq 0.98$, $0.01 \leq y3 \leq 0.09$, $0.01 \leq z3 \leq 0.09$, and $0 \leq w3 \leq 0.09$ may be satisfied.

For example, $x3+y3+z3+w3=1$.

For example, in one or more embodiments, the lithium transition metal composite oxide constituting the cores COR1, COR2, and COR3 may be represented by Chemical Formula 4. The compound represented by Chemical Formula 4 may be referred to as a cobalt-free lithium nickel-manganese oxide.

$$\text{Chemical Formula 4} \qquad \textbf{Li}_{a4}\textbf{Ni}_{x4}\textbf{Mn}_{y4}\textbf{M}^{6}{}_{z4}\textbf{O}_{2-b4}\textbf{X}_{b4}$$

In Chemical Formula 4, $0.9 \leq a4 \leq 1.8$, $0.8 \leq x4 < 1$, $0 < y4 \leq 0.2$, $0 \leq z4 \leq 0.2$, $0.9 \leq x4+y4+z4 \leq 1.1$, and $0 \leq b4 \leq 0.1$, $M^6$ may be one or more elements selected from the group consisting of Al, B, Ba, Ca, Ce, Cr, Fe, Mg, Mo, Nb, Si, Sr, Ti, V, W, and Zr, and X may be one or more elements selected from the group including (e.g., consisting of) F, P, and S.

For example, in one or more embodiments, the lithium transition metal composite oxide constituting the cores COR1, COR2, and COR3 may be represented by Chemical Formula 5. The compound represented by Chemical Formula 5 may be referred to as a lithium cobalt-based oxide.

$$\textbf{Chemical Formula 5} \qquad \text{Li}_{a5}\text{Co}_{x5}\text{M}^{7}{}_{1-x5}\text{O}_{2}$$

In Chemical Formula 5, $0.9 \leq a5 \leq 1.8$, $0.6 \leq x5 \leq 1$, and $M^7$ may be one or more elements selected from the group consisting of Al, B, Ba, Ca, Ce, Cr, Cu, F, Fe, Mg, Mn, Mo, Nb, P, S, Si, Sr, Ti, V, W, and Zr.

For example, in one or more embodiments, the lithium transition metal composite oxide constituting the cores COR1, COR2, and COR3 may be represented by Chemical Formula 6. The compound represented by Chemical Formula 6 may be referred to as a lithium iron phosphate-based compound.

$$\textbf{Chemical Formula 6} \qquad \text{Li}_{a6}\text{Fe}_{x6}\text{M}^{8}{}_{1-x6}\text{PO}_{4}$$

In Chemical Formula 6, $0.9 \leq a6 \leq 1.8$, $0.6 \leq x6 \leq 1$, and $M^8$ may be one or more elements selected from the group consisting of Al, B, Ba, Ca, Ce, Co, Cr, Cu, F, Fe, Mg, Mn, Mo, Nb, P, S, Si, Sr, Ti, V, W, and Zr.

Referring again to FIGS. 8 to 10, the carbon coating layers CTL1, CTL2 are respectively located on the cores COR1, COR2 of the large particle PC. The carbon coating layer CTL3 is located on the core COR3 of the small particle SP. For example, the carbon coating layers CTL1, CTL2, and CTL3 may be identified through component analysis on the positive electrode active material AM. In a positive electrode active material AM including the carbon coating layers CTL1, CTL2, and CTL3, the lithium transition metal complex oxide constituting the cores COR1, COR2, and COR3 may respectively be in direct contact with the carbon-based material constituting the carbon coating layers CTL1, CTL2, and CTL3, which may improve the conductivity of the positive electrode active material layer AML1. In addition, the amount of the conductive material CDM in the electrode plate containing the positive electrode active material AM may be reduced.

The carbon coating layers CTL1, CTL2, and CTL3 may each be located on a part of a surface of the respective cores COR1, COR2, and COR3. For example, the carbon coating layers CTL1 may be located on a part of the surface of the core COR1, the carbon coating layers CTL2 may be located on a part of the surface of the core COR2, and the carbon coating layers CTL3 may be located on a part of the surface of the core COR3. For example, the carbon coating layers CTL1, CTL2, and CTL3 may each be present in the form of islands on the respective cores COR1, COR2, and COR3. The carbon coating layers CTL1, CTL2, and CTL3 may each expose a portion of the surface of the respective cores COR1, COR2, and COR3. For example, the carbon coating layers CTL1 may expose a portion of the surface of the core COR1, the carbon coating layers CTL2 may expose a portion of the surface of the core COR2, and the carbon coating layers CTL3 may a portion of the surface of the core COR3. Thus, the positive electrode active material AM may serve as a pathway for the movement of lithium ions or electrons.

In one or more embodiments, the carbon coating layers CTL1 and CTL2 of the large particle PC and the carbon coating layer CTL3 of the small particle SP may each include graphene. Graphene is one of allotropes of carbon, and may have a structure in which carbon atoms gather (e.g., bonded) to form a two-dimensional plane. Each of the carbon atoms may form a lattice of hexagons with the carbon atoms located at the vertices of the hexagons. Graphene may be in the form of a sheet.

Graphene that may constitute the carbon coating layers CTL1, CTL2, and CTL3 may have a layered structure. Graphene that may constitute the carbon coating layers CTL1, CTL2, and CTL3 may easily slip under external forces. Accordingly, the positive electrode active material AM may be prevented or reduced from being cracked during the rolling of the electrode plate, and the positive electrode 10 having a high mixture density may be manufactured.

For example, a lateral size of graphene may be about 0.1 μm and about 1000 μm. For example, in one or more embodiments, the lateral size of graphene may be about 0.1 μm to about 500 μm, about 0.1 μm to about 200 μm, about 0.1 μm to about 100 μm, about 0.1 to about 50 μm, about 0.1 μm to about 10 μm, about 0.1 μm to about 5 μm, or about 0.1 μm to about 3 μm. The lateral size of graphene may refer to the longest distance any two ends connected on the plane of graphene sheet.

For example, a thickness of the graphene may be less than or equal to about 1 nm. For example, the thickness of the graphene may be about 0.1 nm to about 0.5 nm. The thickness of the graphene may refer to a distance in the thickness direction of graphene sheet.

For example, in one or more embodiments, graphene may be pure graphene. For example, pure graphene may substantially be free of oxygen. Pure graphene may not contain oxygen. Pure graphene may have good or suitable electrical conductivity, chemical stability, and mechanical strength.

In one or more embodiments, graphene may be reduced graphene oxide. Reduced graphene oxide may be a material that includes a reduced form of graphene oxide. By using reduced graphene oxide instead of pure graphene, cost may be reduced, and mass production may be made possible.

For example, reduced graphene oxide may include some oxidized portions, unlike pure graphene. Reduced graphene oxide may include a small amount of oxygen. Defects may be present in reduced graphene oxide. As a result, reduced graphene oxide may improve or optimize interfacial reactions in the rechargeable lithium battery, or may increase the storage capacity of lithium ions by adsorbing or diffusing lithium ions. Reduced graphene oxide may have sufficient electrical conductivity, chemical stability, and mechanical strength to improve or optimize the performance of a rechargeable lithium battery.

For example, reduced graphene oxide may have a carbon-oxygen covalent bond. The carbon-oxygen covalent bond may include C-O, C=O, O-C=O, and/or the like.

For example, in one or more embodiments, reduced graphene oxide may have an oxygen amount of 20 wt% or less in component analysis, based on a total weight of the reduced graphene oxide.

For example, in one or more embodiments, the constituents of the carbon coating layers CTL1, CTL2, and CTL3 may be identified via X-ray Photoelectron Spectroscopy (XPS). As a result of XPS analysis, peaks corresponding to carbon-oxygen covalent bonds may be observed on the surfaces of the carbon coating layers CTL1, CTL2, and CTL3 formed using reduced graphene oxide. In contrast, on the surfaces of the carbon coating layers CTL1, CTL2, and CTL3 formed using pure graphene, the intensity of the peaks corresponding to carbon-oxygen covalent bonds may be reduced or nearly absent.

For example, in one or more embodiments, Raman Spectroscopy may be used to identify the constituents of the carbon coating layers CTL1, CTL2, and CTL3. Defects in reduced graphene oxide may be identified via the D-band of Raman spectroscopy. In a Raman spectrum, the carbon coating layers CTL1, CTL2, CTL3 formed using reduced graphene oxide may have relatively large D-band intensity and large D/G ratio value. In contrast, the carbon coating layers CTL1, CTL2, CTL3 formed using pure graphene may have reduced D-band intensity and D/G ratio value.

For example, in one or more embodiments, the constituents of the carbon coating layers CTL1, CTL2, and CTL3 may be determined by using Fourier Transform Infrared Spectroscopy (FT-IR). In the FT-IR spectrum of the positive electrode active material AM including the carbon coating layers CTL1, CTL2, and CTL3 formed using reduced graphene oxide, peaks corresponding to carbon-oxygen covalent bonds may be observed. In contrast, in the FT-IR spectrum of the positive electrode active material AM including the carbon coating layers CTL1, CTL2, and CTL3 formed using pure graphene, peaks corresponding to the carbon-oxygen covalent bonds may be reduced or nearly absent.

For example, in one or more embodiments, the constituents of the carbon coating layers CTL1, CTL2, and CTL3 may be determined by Thermogravimetric Analysis (TGA). A TGA graph for a positive electrode active material AM including carbon coating layers CTL1, CTL2, and CTL3 formed using reduced graphene oxide may show a loss in mass due to release of oxygen upon heating. In contrast, a TGA graph for the positive electrode active material AM including the carbon coating layers CTL1, CTL2, and CTL3 formed using pure graphene may have less or little mass loss.

The conductivity of the graphene constituting the carbon coating layers CTL1, CTL2, and CTL3 may be greater than the conductivity of the carbon-based material constituting the conductive material CDM. The positive electrode active material AM of one or more embodiments may contain graphene, so that the conductivity of the positive electrode active material layer AML1 may be further improved.

An amount of the carbon coating layers CTL1, CTL2, and CTL3 in the positive electrode active material AM may be about 0.01 wt% to about 1 wt% relative to (e.g., based on) the total weight of the positive electrode active material AM. For example, the amount of the carbon coating layers CTL1, CTL2, and CTL3 in the positive electrode active material AM may be about 0.01 wt% or more, about 0.05 wt% or more, or about 0.1 wt% or more relative to the total weight of the positive electrode active material AM. For example, the amount of the carbon coating layers CTL1, CTL2, and CTL3 in the positive electrode active material AM may be about 1 wt% or less, about 0.5 wt% or less, about 0.3 wt% or less, or about 0.2 wt% or less relative to the total weight of the positive electrode active material AM. When the amount of the carbon coating layers CTL1, CTL2, and CTL3 satisfy the ranges described above, the positive electrode active material AM may have excellent or suitable conductivity. In addition, the positive electrode 10 may have a high mixture density. Thus, a rechargeable lithium battery having excellent or suitable energy density, capacity, charge-discharge efficiency, and high-temperature lifetime characteristics by including such a positive electrode, may be provided.

A thickness of each of the carbon coating layers CTL1, CTL2, and CTL3 may be about 0.1 nm to about 50 nm. For example, in one or more embodiments, the thickness of each of the carbon coating layers CTL1, CTL2, and CTL3 may be about 1 nm to about 10 nm, about 1 nm to about 5 nm, or about 2 nm to about 3 nm. When the thicknesses of each of the carbon coating layers CTL1, CTL2, and CTL3 satisfy the ranges described above, the positive electrode active material AM may have excellent or suitable conductivity. In addition, the positive electrode 10 may have a high mixture density. Thus, a rechargeable lithium battery having excellent or suitable energy density, capacity, charge-discharge efficiency, and high-temperature lifetime characteristics by including such a positive electrode, may be provided.

In one or more embodiments, the positive electrode active material AM may further include transition metal coating layers respectively positioned on the surfaces of the cores COR1, COR2, and COR3. The transition metal coating layer may be located on all, or at least a portion of, the surface of each of the large particle PC and/or small particle SP. The transition metal coating layers may be located between the cores COR1, COR2, COR3 and the carbon coating layers CTL1, CTL2, CTL3. For example, in one or more embodiments, the positive electrode active material AM may further contain a transition metal coating layer located at the surface of each of the primary particles PRPs inside the large particle PC, i.e., coated along the interface of the primary particles. For example, the transition metal coating layers may include, but is not limited to, nickel, cobalt, aluminium, and/or the like. Each of the large particle PC and the small particle SP may include the transition metal coating layer, so that the collapse of the structure due to repetition of charge and discharge may be effectively suppressed or reduced, and the lifetime characteristics may be improved.

The positive electrode active material AM according to one or more embodiments of the present disclosure may be manufactured by dry coating graphene on the surface of a lithium transition metal composite oxide (e.g., in the form of lithium transition metal composite oxide particles) using a mixer which will be described later. The positive electrode active material AM is a lithium transition metal composite oxide whose surface is coated with the carbon coating layers CTL1, CTL2, or CTL3. The positive electrode active material AM may have a surface roughness. The positive electrode active material AM may have a surface that is not damaged and worn. The carbon coating layers CTL1, CTL2, and CTL3 may not be damaged and worn. The carbon coating layers CTL1, CTL2, and CTL3 of the positive electrode active material AM may expose a part of the surface of the lithium transition metal composite oxide. The exposed part of the surface may be formed through a dry coating process using a mixer. The exposed part of the surface may have a very small area.

In contrast, if (e.g., when) the surface of the positive electrode active material AM manufactured through dry coating using a mixer described later is damaged and worn, the surface roughness of the positive electrode active material AM may decrease. Degradation of the surface of the positive electrode active material AM may occur. For example, the surface of the positive electrode active material AM and/or the carbon coating layers CTL1, CTL2, and CTL3 may be oxidized or chemically decomposed. The exposed part of the surface of the lithium transition metal composite oxide may be reduced. The thickness of the carbon coating layers CTL1, CTL2, and CTL3 may decrease. Furthermore, if (e.g., when) the surface of the positive electrode active material AM manufactured through dry coating using a mixer is further damaged and worn, scratches, cracks, and/or the like may occur on the surface of the positive electrode active material AM, and the carbon coating layers CTL1, CTL2, and CTL3 may peel off.

The positive electrode 10 according to one or more embodiments of the present disclosure includes the positive electrode active material AM, and the positive electrode active materials AM include the carbon coating layers CTL1, CTL2, and/or CTL3, so that it may achieve excellent or suitable conductivity and high mixture density. For example, a mixture density of the positive electrode 10 according to one or more embodiments of the present disclosure may be about 3.0 g/cc to about 5.0 g/cc. For example, the mixture density of the positive electrode 10 according to one or more embodiments of the present disclosure is about 3.8 g/cc or more, and may be about 4.5 g/cc or less, or about 4.3 g/cc or less. The mixture density is defined as the weight of the components in the positive electrode 10 - excluding the positive electrode current collector COL1 - containing the positive electrode active materials AM, conductive material CDM, and binder BND, by their volume. For example, the mixture density may be expressed as the weight of the positive electrode active material layer AML1 per unit volume.

The rechargeable lithium battery according to one or more embodiments of the present disclosure may have excellent or suitable energy density, capacity, charge-discharge efficiency, and high-temperature lifetime characteristics by including the positive electrode active material AM.

## Method for Manufacturing Positive Electrode

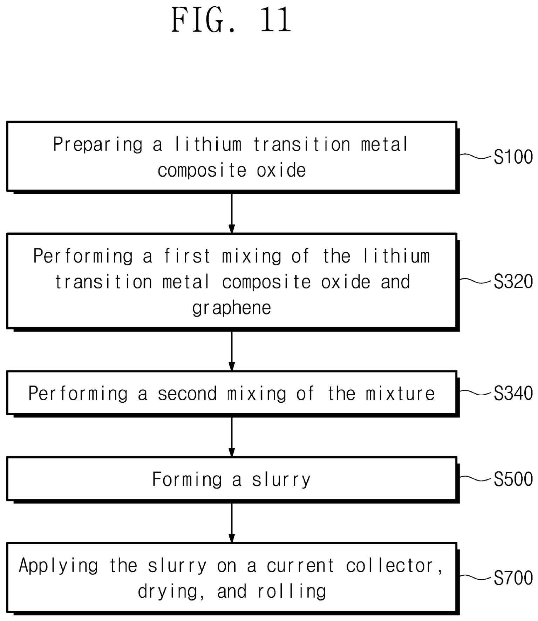

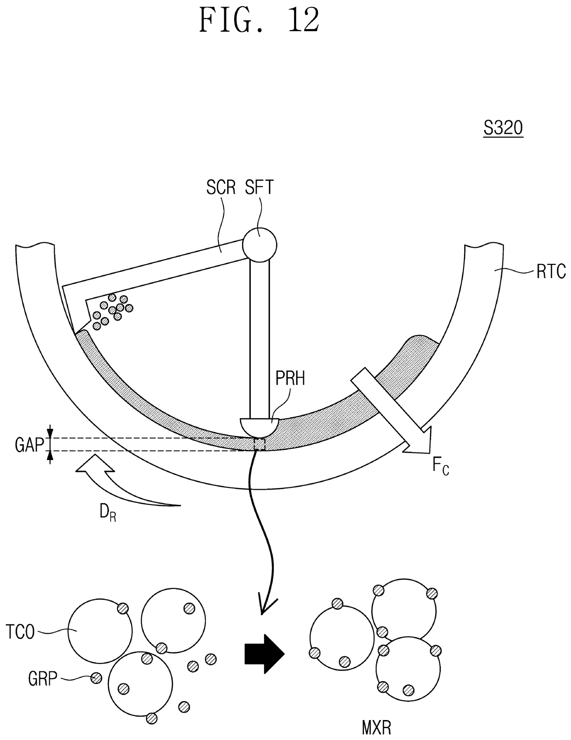

FIG. 11 is a flowchart for describing a method for manufacturing a positive electrode according to one or more embodiments of the present disclosure. FIGS. 12 to 15 are schematic diagrams each for explaining a step (e.g., act or task) of the manufacturing method.

Referring to FIG. 11, a method of manufacturing a positive electrode 10 according to one or more embodiments of the present disclosure may include: preparing a positive electrode active material AM; forming a slurry including the positive electrode active material AM, a conductive material CDM, a binder BND, and a solvent (S500); and applying the slurry on a current collector, drying, and rolling (S700).

The preparing of the positive electrode active material AM according to one or more embodiments of the present disclosure includes: preparing a lithium transition metal composite oxide (S100); performing a first mixing of the lithium transition metal composite oxide and graphene (S320); and performing a second mixing of the mixture (S340).

The positive electrode active material AM includes a lithium transition metal composite oxide (S100). For example, if (e.g., when) the lithium transition metal composite oxide is a lithium nickel-based oxide, it may be formed by a manufacturing method including: forming a nickel-based hydroxide (a1); mixing the nickel-based hydroxide and a lithium raw material (a2); and performing a heat treatment (a3). The manufacturing method of the nickel-based oxide according to one or more embodiments may be as follows.

The nickel-based hydroxide includes a transition metal. The transition metal contains nickel (Ni) and may further include $M^1$ and $M^2$ of Chemical Formula 1 as described above. For example, in one or more embodiments, the nickel-based hydroxide may include nickel (Ni) and cobalt (Co) as transition metals. For example, in one or more embodiments, nickel-based hydroxide may include nickel (Ni), cobalt (Co), as transition metals, and aluminium (Al). In one or more embodiments, the nickel-based hydroxide may include nickel (Ni), cobalt (Co), and manganese (Mn) as transition metals.

The nickel-based hydroxide may be obtained by a coprecipitation method (a1). For example, the coprecipitation method may include dissolving a transition metal raw material in a solvent such as distilled water to prepare a transition metal salt solution, and continuously introducing the transition metal salt solution together with a chelating agent and/or a basic aqueous solution into a reactor to cause precipitation. After the precipitate is collected in the form of a slurry, the slurry solution may be filtered and dried to obtain a nickel-based hydroxide.

The transition metal raw material may include a salt of a transition metal as described above. The salt of the transition metal may be a sulfate, a nitrate, an acetate, a halide, a hydroxide, and/or the like, and is not particularly limited as long as it may be dissolved in the solvent. For example, in one or more embodiments, the transition metal raw material may include a nickel salt, a cobalt salt, and an aluminium salt. In one or more embodiments, the transition metal raw material may include a nickel salt, a cobalt salt, and a manganese salt. The transition metal raw material may be mixed by adjusting the molar ratio so that the positive electrode active material has high-capacity characteristics.

The nickel-based hydroxide may be mixed with the lithium raw material at a certain ratio (a2). For example, in one or more embodiments, the nickel-based hydroxide and the lithium raw material may be mixed in a molar ratio of about 1:1. The lithium raw material is not particularly limited as long as it is a material commonly used in the manufacturing of a positive electrode active material of rechargeable lithium battery. For example, the lithium raw material may include a lithium salt such as lithium carbonate, lithium nitrate, lithium hydroxide, and/or lithium sulfate.

A mixture of the nickel-based hydroxide and the lithium raw material may be heat-treated by putting it into a furnace (a3). The heat treatment temperature may be about 700 °C to about 1,000 °C. The heat treatment may be performed in an oxidizing atmosphere such as air or oxygen. The heat treatment time may be about 10 hours to about 30 hours. For example, in one or more embodiments, preliminary calcination may be further performed at about 150 °C to about 800 °C before the heat treatment.

In one or more embodiments, a grinding process may be further performed after the heat treatment. Through the grinding process, a lithium nickel-based composite oxide having a desired or suitable average particle diameter may be obtained.

Referring to FIG. 12, the lithium transition metal composite oxide TCO (in the form of particles) and graphene GRP are first mixed, and a mixture MXR (e.g. a first mixture) is formed through a first mixing process (S320).

The type (kind) of graphene GRP is not limited. In one or more embodiments, the graphene GRP may be provided, for example, by reducing graphene oxide. For example, the graphene GRP may be formed by adding a reducing agent to reduce graphene oxide in a specific pH range. In one or more embodiments, for example, the graphene GRP may be formed by heat treating graphene oxide at a set or specific temperature range.

When graphene oxide is reduced, reduced graphene oxide particles may be obtained. The reduced graphene oxide particles may contain a single layer of graphene sheet or a plurality of graphene sheets.

The lithium transition metal composite oxide TCO and the graphene GRP may be mixed in a weight ratio of about 99:1 to about 99.99:0.01. For example, in one or more embodiments, the weight ratio of the lithium transition metal composite oxide TCO to the graphene GRP may be about 99:1 to about 99.9:0.1, about 99.5:0.5 to about 99.9:0.1, or about 99.6:0.4 to about 99.8:0.2. When the weight ratio of the lithium transition metal composite oxide TCO to the graphene GRP satisfies the range described above, the manufactured positive electrode active material AM may have excellent or suitable conductivity, and the positive electrode 10 may have high mixture density.

The first mixing process may be a dry process. The dry process may be a process in which a solvent is not provided or used in the process. In the dry process, additives and/or the like may not be provided.

The first mixing process is performed using a mixer. The mixer includes a rotating chamber RTC. The rotating chamber RTC may be a cylindrical chamber. For example, the rotating chamber RTC may be a rotor. The rotating chamber RTC may be configured to rotate inside a fixed (non-rotating) vessel. The mixer includes a press head PRH and may also include a scraper SCR. The press head PRH, and the optional scraper SCR, may (each) be fixed within the mixer. The press head PRH may be fixed via a shaft SFT. The press head PRH may be in a rounded shape. The radius of the press head PRH may be smaller than the radius of the rotating chamber RTC. For example, in one or more embodiments, the mixer may include a mechanofusion. For example, the mechanofusion may be a device from Howokawa Micron Corporation (e.g., https://www.hosokawamicron.co.jp/en/product/machines/detail/214.html).

There is a gap GAP between an inner wall of the rotating chamber RTC and the press head PRH. The gap GAP is a clearance space between the inner wall of the rotating chamber RTC and the press head PRH. The gap GAP is greater than 0 mm and less than or equal to about 1 cm. For example, the gap GAP may be about 8 mm or less, or about 5 mm or less. For example, the gap GAP may be about 1 mm or greater, or about 2 mm or greater. When the gap GAP satisfies the above-described range, it may uniformly (e.g., substantially uniformly) mix the lithium transition metal composite oxide TCO and the graphene GRP while preventing or reducing damage and wear of the lithium transition metal composite oxide TCO in the dry process.

A clearance space between the inner wall of the rotating chamber RTC and the scraper SCR may be smaller than the gap GAP. For example, the clearance space between the inner wall of the rotating chamber RTC and the scraper SCR may be greater than 0 mm, and about 1 mm or less, or about 0.5 mm or less.

The lithium transition metal composite oxide TCO and the graphene GRP are introduced into the rotating chamber RTC. When the rotating chamber RTC rotates in a specific direction $D_R$, the lithium transition metal composite oxide TCO and the graphene GRP may be forced toward the inner wall of the rotating chamber RTC by the centrifugal force $F_c$. While the lithium complex transition metal oxide TCO and the graphene GRP pass through the gap GAP, a high shear field may be formed. The lithium transition metal composite oxide TCO and the graphene GRP may adhere to each other while exiting the gap GAP, and may also adhere to the inner wall of the rotating chamber RTC. If present, the scraper SCR may scrape off the lithium transition metal composite oxide TCO and the graphene GRP that are adhered to the inner wall of the rotating chamber RTC. The lithium transition metal composite oxide TCO and the graphene GRP may be redispersed in the rotating chamber RTC and may pass through the gap GAP again. During the rotation of the rotating chamber RTC, the lithium transition metal composite oxide TCO and the graphene GRP may continue to undergo processes of compression, frictional shearing, and deagglomeration.

The first mixing process (i.e., first mixing) is performed at a first shear rate. The first shear rate is different to a second shear rate of the second mixing process (i.e., second mixing) described below. The first shear rate is less than the second shear rate of the second mixing step (e.g., act or task) described below. For example, in one or more embodiments, the first shear rate may be about 500 s⁻¹ to about 3,000 s⁻¹. For example, the first shear rate may be about 500 s⁻¹ or more, about 1,000 s⁻¹ or more, about 1,500 s⁻¹ or more, or about 2,000 s⁻¹ or more. For example, the first shear rate may be about 3,000 s⁻¹ or less, or about 2,500 s⁻¹ or less. When the first shear rate satisfies the above-described range, it may uniformly (e.g., substantially uniformly) mix the lithium transition metal composite oxide TCO and the graphene GRP while preventing or reducing damage and wear of the lithium transition metal composite oxide TCO due to collisions, friction, and/or the like. The first shear rate may be defined by Equation 3.

The first shear rate (s⁻¹) = a first rotational speed (mm/s) of rotating chamber RTC/a gap GAP (mm) =

$$\{\pi \times \text{a diameter (mm) of press head PRH} \times \text{a first rotation period (rpm) of rotation chamber RTC}/60\}/ \text{a gap (GAP) (mm)} \qquad \text{Equation 3}$$

In Equation 3, the first rotation speed (mm/s) of the rotating chamber RTC is about 1,000 mm/s to about 6,000 mm/s. For example, the first rotational speed (mm/s) of the rotating chamber RTC may be about 2,000 mm/s or more, about 3,000 mm/s or more, or about 4,000 mm/s or more. For example, the first rotation speed (mm/s) of the rotating chamber RTC may be about 5,000 mm/s or less.

The diameter of the press head PRH may be about 10 mm to about 2,000 mm, about 10 mm to about 1,000 mm, about 10 mm to about 700 mm, about 10 mm to about 500 mm, about 10 mm to about 100 mm, or about 50 mm to about 100 mm. In this description, the diameter of the press head PRH may correspond to the maximum width of the curved surface of the press head where shearing occurs. For example, the press head PRH may have a hemispherical shape, and the diameter of the press head PRH may refer to the maximum diameter of the hemispherical structure, i.e., the diameter of the sphere.

The gap GAP is as described above. The gap GAP is less than or equal to about 1 cm. For example, the gap GAP may be about 8 mm or less, or about 5 mm or less. The gap GAP is greater than 0 mm. For example, the gap GAP may be about 1 mm or more, or about 2 mm or more.

The first mixing process may be carried out for about 0.5 minutes (30 seconds) to about 5 minutes. For example, the first mixing process may be carried out for about 0.5 minutes or more, or about 0.7 minutes or more, and for about 5 minutes or less, or about 3 minutes or less. When the first mixing process is performed for the time described above, it may uniformly (e.g., substantially uniformly) mix the lithium transition metal composite oxide TCO and the graphene GRP while preventing or reducing damage and wear of the lithium transition metal composite oxide TCO.

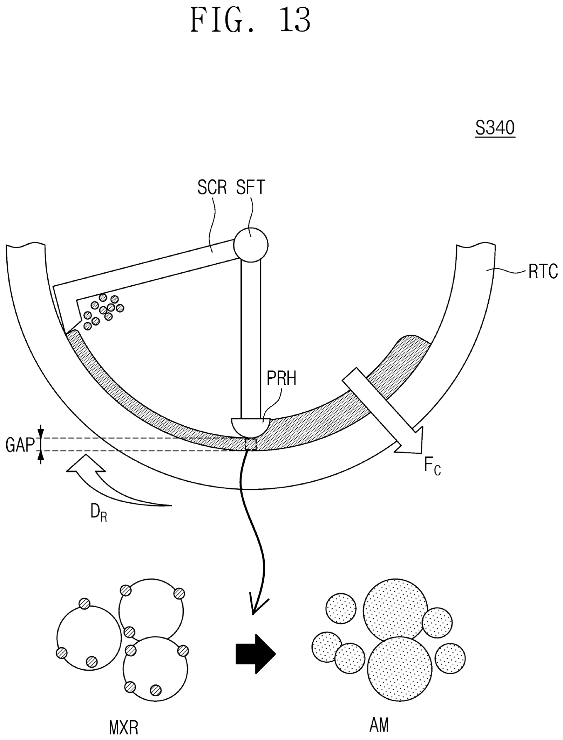

Referring to FIG. 13, the mixture MXR (e.g. the first mixture) undergoes the second mixing, and the positive electrode active material AM is formed through the second mixing process (S340).

The second mixing process may be a dry process. The dry process may be a process in which a solvent is not provided and used in the process. In the dry process, additives and/or the like may not be provided.

The second mixing process is performed using the mixer described above.

The gap GAP is less than or equal to about 1 cm. For example, the gap GAP may be about 8 mm or less, or about 5 mm or less. The gap GAP is greater than 0 mm. For example, the gap GAP may be about 1 mm or more, or about 2 mm or more. When the gap GAP satisfies the above-described range, the graphene GRP may be exfoliated, and the surface of the lithium transition metal composite oxide TCO may be coated with graphene GRP. In addition, if (e.g., when) the gap GAP satisfies the above-described range, the positive electrode active material AM may be manufactured with minimal damage and wear in a dry process.

The second mixing process (i.e., the second mixing) is performed at the second shear rate. The second shear rate is different to the first shear rate. The second shear rate is greater than the first shear rate. The second shear rate may be about 2,000 s$^{-1}$ to about 9,000 s$^{-1}$. For example, the second shear rate may be about 2,000 s$^{-1}$ or more, about 2,500 s$^{-1}$ or more, or about , s$^{-1}$ or more. For example, the second shear rate may be about 9,000 s$^{-1}$ or less, about 8,500 s$^{-1}$ or less, about 8,000 s$^{-1}$ or less, about 7,500 s$^{-1}$ or less, or about 7,000 s$^{-1}$ or less. When the second shear rate satisfies the range described above, the graphene GRP may be exfoliated, and the surface of the lithium transition metal composite oxide TCO may be coated with graphene GPR. In addition, the positive electrode active material AM may be manufactured while minimizing or reducing damage and wear caused by collisions, friction, and/or the like, in a dry process.

A ratio of the first shear rate to the second shear rate may be about 1:1.2 to about 1:3.5. For example, in one or more embodiments, the ratio of the first shear rate to the second shear rate may be about 1:1.5 to about 1:3, or about 1:1.5 to about 1:2.5. When the ratio of the first shear rate to the second shear rate satisfies the above-described range, the lithium transition metal composite oxide TCO and the graphene GRP may be uniformly (e.g., substantially uniformly) mixed while preventing or reducing damage and wear of the lithium transition metal composite oxide TCO due to collisions, friction, and/or the like. In addition, the graphene GRP may be exfoliated, and the surface of the lithium transition metal composite oxide TCO may be coated with graphene GRP. The positive electrode active material AM may be manufactured while minimizing or reducing damage and wear caused by collisions, friction, and/or the like, in a dry process.

The second shear rate may be defined by Equation 4.

The second shear rate (s$^{-1}$) = a second rotational speed (mm/s) of rotating chamber RTC / a gap (GAP) (mm) = {$\pi \times$ a diameter (mm) of press head PRH $\times$ a second rotation period (rpm) of rotation chamber RTC / 60}/a gap (GAP) (mm)     Equation 4

In Equation 4, the second rotation speed (mm/s) of the rotating chamber RTC is about 4,000 mm/s to about 18,000 mm/s. For example, the second rotation speed (mm/s) of the rotating chamber RTC may be about 5,000 mm/s or more, or about 6,000 mm/s or more. For example, the second rotation speed (mm/s) of the rotating chamber RTC may be about 17,000 mm/s or less, about 16,000 mm/s or less, about 15,000 mm/s or less, or about 14,000 mm/s or less.

The diameter of the press head PRH may be about 10 mm to about 2,000 mm, about 10 mm to about 1,000 mm, about 10 mm to 700 mm, about 10 mm to 500 mm, about 10 nm to 100 mm, or about 50 nm to about 100 mm. The diameter of the press head PRH may correspond to the maximum width of the curved surface of the press head where shearing occurs. For example, the press head PRH may have a hemispherical shape, the diameter of the press head PRH may refer to the maximum diameter of the hemispherical structure, i.e., the diameter of the sphere.

The gap GAP is as described above. The gap GAP is less than or equal to about 1 cm. For example, the gap GAP may be about 8 mm or less, or about 5 mm or less. The gap GAP is greater than 0 mm. For example, the gap GAP may be about 1 mm or more, or about 2 mm or more.

The second mixing process may be performed for about 5 minutes to about 20 minutes. For example, the second mixing process may be carried out for about 5 minutes or more, or about 7 minutes or more, and for about 20 minutes or less, or about 15 minutes or less. When the second mixing process is performed for the time period described above, the graphene GRP may be exfoliated, and the surface of the lithium transition metal composite oxide TCO may be coated with the graphene GPR. In addition, damage and wear of the positive electrode active material AM in the dry process may be minimized or reduced.

In the present disclosure, the positive electrode active material AM may be manufactured by coating the surface of a lithium transition metal composite oxide TCO with graphene GRP through a dry process. When a dry process is used, a solvent, an additive, and/or the like may not be required, which simplifies the process and reduces the time required for the process. In addition, by using the dry process, the thicknesses of the carbon coating layers CTL1, CTL2, and CTL3 may easily be adjusted.

In the present disclosure, by performing the second mixing process after the first mixing process, damage and wear of the lithium transition metal composite oxide TCO in the dry process may be minimized or reduced, and the desired or suitable positive electrode active material AM may be manufactured.

In the present disclosure, the positive electrode active material AM may be manufactured using the above-described mixer under the above-described conditions, so that the surface thereof may be coated with graphene GPR while minimizing or reducing damage and wear of the lithium transition metal composite oxide TCO, and surface damage and wear of a finally manufactured positive electrode active material may also be minimized or reduced. In addition, the positive electrode active material AM may be manufactured with only relatively small energy consumption. For example, in one or more embodiments, the first and the second mixing processes may require a power (e.g., power consumption) of about 350 Wh or less per kilogram of the positive electrode active material AM produced. For example, the first and the second mixing processes may require a power of about 50 Wh or more, about 60 Wh or more, about 70 Wh or more, or about 80 Wh or more per 1 kg of the positive electrode active material AM, and may require a power of about 350 Wh or less, about 300 Wh or less, about 200 Wh or less, or about 110 Wh or less (e.g., depending on the type (kind) of positive electrode active material). This may allow for the mass production of the positive electrode active material AM.

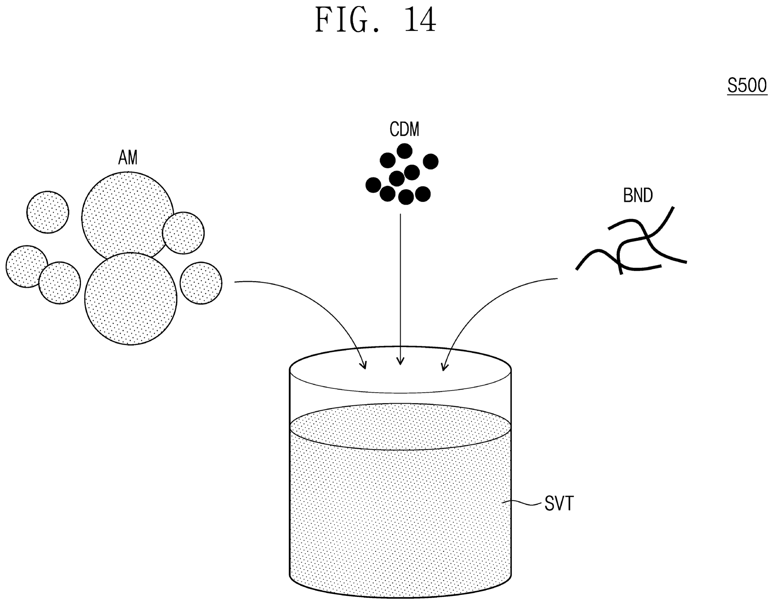

Referring to FIG. 14, the positive electrode active material AM, a conductive material CDM, and a binder BND may be dissolved or dispersed in a solvent SVT to form a slurry (S500). The conductive material CDM and the binder BND may be the same as those described above with reference to FIGS. 1 to 7.

The solvent may be a solvent commonly used in the art, and may include, for example, at least one selected from among dimethyl sulfoxide (DMSO), isopropyl alcohol, N-methylpyrrolidone (NMP), acetone, water, and a combination thereof.

A weight ratio of the conductive material CDM to the positive electrode active material AM may be about 1/99.5 to about 1/97. For example, in one or more embodiments, the weight ratio of the conductive material CDM to the positive electrode active material AM may be about 1/99.5 or more, about 1/99 or more, about 1/98.5 or more, or about 1/98 or more. For example, the weight ratio of the conductive material CDM to the positive electrode active material AM may be about 1/97 or less, or about 1/97.5 or less.

Because the positive electrode 10 may contain the positive electrode active material AM, the amount of the conductive material CDM in the electrode plate may be reduced. As a result, the positive electrode 10 may have excellent or suitable conductivity and may be implemented to have a high mixture density. Accordingly, a rechargeable lithium battery having excellent or suitable energy density, capacity, charge-discharge efficiency, and high-temperature lifetime characteristics may be provided.

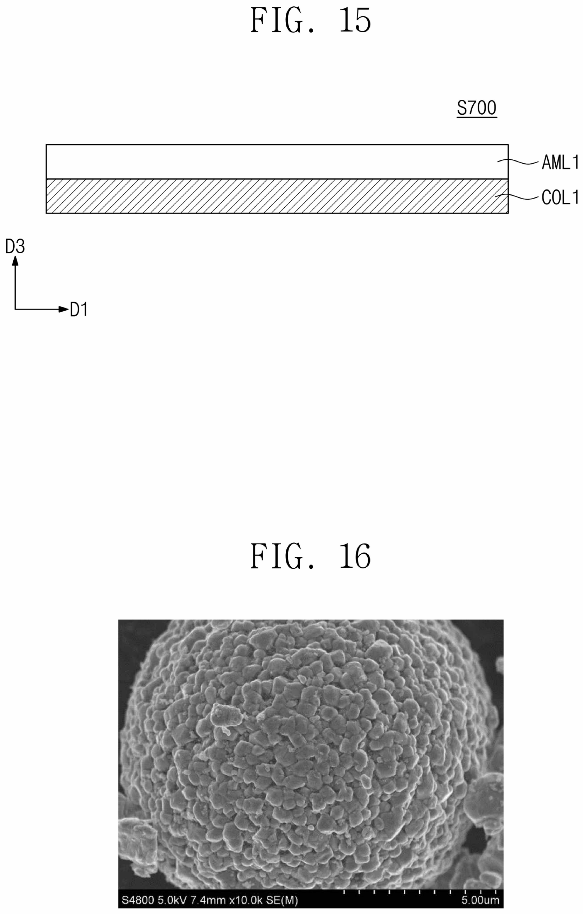

Referring to FIG. 15, the positive electrode may be prepared by applying the slurry on the current collector, followed by drying and rolling (S700).

For example, the slurry may be applied onto the current collector to have a mixture density of about 3.0 g/cc to about 5.0 g/cc and a loading level of about 20 $g/cm^2$ to about 30 $g/cm^2$. The mixture density is defined as the weight of the components in the positive electrode 10 - excluding the positive electrode current collector COL1 - containing the positive electrode active materials AM, conductive material CDM, and binder BND, by their volume. For example, the mixture density may be expressed as the weight of the positive electrode active material layer AML1 per unit volume. The loading level is defined as the weight of the components in the components in the positive electrode 10 - excluding the positive electrode current collector COL1 - containing the positive electrode active materials AM, conductive material CDM, and binder BND, by the electrode area.

The rolling may be performed with a roller. The rolling may be performed to achieve the desired or suitable thickness of the positive electrode active material layer AML1. For example, in one or more embodiments, the rolling may be performed so that the thickness of the positive electrode active material layer AML1 become about 20 $\mu$m to about 100 $\mu$m. For example, the rolling may be performed so that the thickness of the positive electrode active material layer AML1 become about 20 $\mu$m or more, about 30 $\mu$m or more, about 40 $\mu$m or more, or about 50 $\mu$m or more. For example, the rolling may be performed so that the thickness of the positive electrode active material layer AML1 become about 100 $\mu$m or less, about 90 $\mu$m or less, about 80 $\mu$m or less, about 70 $\mu$m or less, or about 60 $\mu$m or less.

Hereinafter, the present disclosure will be further described in more detail with reference to Examples. However, these examples are intended to illustrate the present disclosure, and the scope of the present disclosure is not limited to these examples.

**Example 1**

A lithium transition metal composite oxide having a chemical formula of $LiNi_{0.91}Co_{0.075}Al_{0.015}O_2$ including both large particles having an average particle diameter of about 15 $\mu$m and small particles having an average particle diameter of about 3 $\mu$m was prepared. The weight ratio of the large particles PC to the small particles SP was about 70:30. The lithium transition metal composite oxide and reduced graphene oxide were charged to a mixer, Mechanofusion (Hosokawamicron), in a weight ratio of about 99.7:0.3. The mixer included a rotating chamber RTC. The gap GAP between the inner wall of the rotating chamber RTC and the press head PRH was about 2 mm. The diameter of the press head PRH was about 90 mm. The first mixing process was performed at a first shear rate of about 2,300 $s^{-1}$ for about 1 minute. The second mixing process was performed at a second shear rate of about 3,450 $s^{-1}$ for about 10 minutes to manufacture a positive electrode active material AM. The ratio of the first shear rate to the second shear rate was about 1:1.5. The amount of the carbon coating layer in the positive electrode active material AM was about 0.195 wt% relative to the total weight of the positive electrode active material AM.

**Example 2**

A positive electrode active material was prepared in substantially the same manner as Example 1, except that the second shear rate was about 4,700 s$^{-1}$, and the ratio of the first shear rate to the second shear rates was about 1:2.

**Example 3**

A positive electrode active material was prepared in substantially the same manner as Example 1, except that the second shear rate was about 7,300 s$^{-1}$, and the ratio of the first shear rate to the second shear rates was about 1:3.

**Example 4**

A positive electrode active material was prepared in substantially the same manner as Example 1, except for the use of a lithium transition metal composite oxide having a chemical formula of $LiCoO_2$ including large particles having an average particle diameter of about 18 $\mu$m and small particles having an average particle diameter of about 3.5 $\mu$m.

**Example 5**

A positive electrode active material was prepared in substantially the same manner as Example 4, except that the second shear rate was about 4,700 s$^{-1}$, and the ratio of the first shear rate to the second shear rates was about 1:2.

**Example 6**

A positive electrode active material was prepared in substantially the same manner as Example 4, except that the second shear rate was about 7,300 s$^{-1}$, and the ratio of the first shear rate to the second shear rates was about 1:3.

**Comparative Example 1**

A positive electrode active material was prepared in substantially the same manner as Example 1, except that the second shear rate was about 2,300 s$^{-1}$, and the ratio of the first shear rate to the second shear rates was about 1:1.

**Comparative Example 2**

A positive electrode active material was prepared in substantially the same manner as Example 4, except that the second shear rate was about 2,300 s$^{-1}$, and the ratio of the first shear rate to the second shear rates was about 1:1.

**Preparation of Positive Electrode**

A slurry was prepared by mixing about 97.7 wt% of a positive electrode active material AM, about 1 wt% of a conductive material (carbon nanotubes, acetylene black), and about 1.3 wt% of a binder (polyvinylidene fluoride) in an N-methylpyrrolidone solvent.
The slurry was applied to an aluminium current collector, dried, and rolled to manufacture a positive electrode. The slurry was applied onto the current collector to have a loading level of about 20 g/cm$^2$. Drying was carried out at a temperature of about 110°C for about 24 hours. Rolling was performed using a roller to achieve a mixture density of about 3.9 g/cc. The thickness of the positive electrode active material layer AML1 was about 50 $\mu$m.

**Preparation of Rechargeable lithium battery**

A rechargeable lithium battery was prepared using one of the above positive electrodes and a lithium metal as a counter electrode, with a polyethylene polypropylene multilayer structure separator placed between them. As an electrolyte, a solution of 1.0 M $LiPF_6$ lithium salt dissolved in a solvent mixture of ethylene carbonate and diethyl carbonate in about 50:50 volume ratio was used. The electrolyte was injected to prepare a coin half-cell.

**Evaluation Example 1: Surface Analysis after First Mixing Process**

FIG. 16 is a scanning electron microscope (SEM) image of the surface of a positive electrode active material according to Example 3 after the first mixing process during manufacture . Referring to FIG. 16, after the first mixing process of the lithium transition metal composite oxide and the reduced graphene oxide, no damage and wear of the surface of the lithium transit metal composite oxide was observed. Meanwhile, the first mixing process alone did not result in the formation of a carbon coating layer on the surface of the lithium transition metal composite oxide. Thus, it was confirmed that if (e.g., when) the first shear rate satisfies the target range, the lithium transition metal composite oxide and reduced graphene oxide can be mixed while minimizing or reducing damage and wear of the surface of the lithium transition metal composite oxide.

**Evaluation Example 2: Surface Analysis after Second Mixing Process**

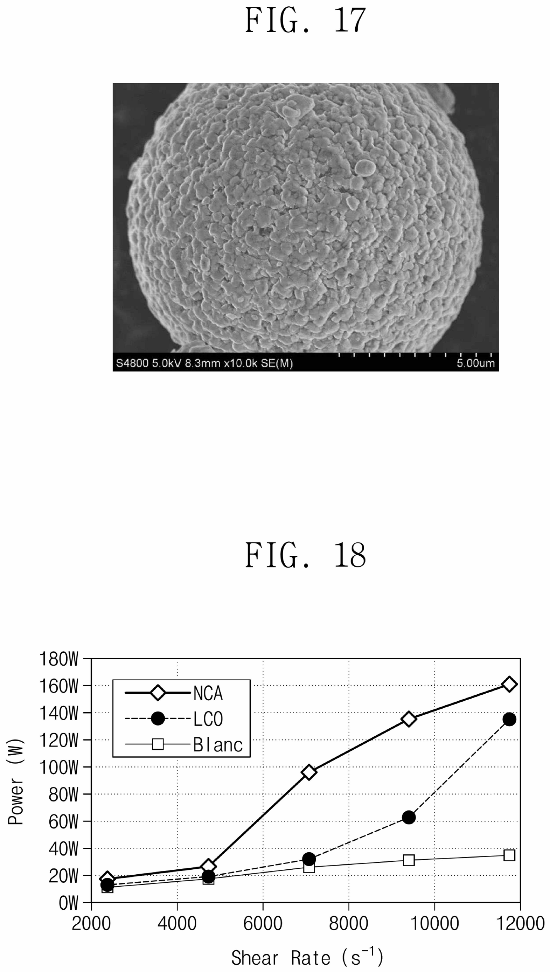

FIG. 17 is a scanning electron microscope (SEM) image of the positive electrode active material according to Example 3. Referring to FIG. 17, it was confirmed that a carbon coating layer was formed on the surface of the lithium transition metal composite oxide after completion of the second mixing process. For example, in FIG. 16, the shapes of the primary particles are distinct and the surface of the secondary particle is rough, whereas in FIG. 17, the boundaries of the primary particles and the surface of the secondary particle exhibit a smoother and more uniform structure, confirming that a carbon coating layer was formed between the primary particles and on the surface of the secondary particles. In addition, damage and wear were not observed on the surface of the positive electrode active material.

**Evaluation Example 3: Evaluation of Power According to Shear Rate**

The power (power consumption) according to the shear rate of the mixer during the manufacturing of the positive electrode active material is shown in FIG. 18. FIG. 18 shows the results when a total of 50 g of lithium transition metal composite oxide and reduced graphene oxide were added. The power (power consumption) is the output measured from the mixer at each shear rate. Blanc represents the results when the mixer was operated under the same conditions without adding the lithium transition metal composite oxide and reduced graphene oxide.

Referring to FIG. 18, as the shear rate of the mixer increased, the power (power consumption) increased. In particular, when the shear rate of the mixer exceeds about $9000 \, s^{-1}$, relatively large power (power consumption) is required in the manufacturing of the positive electrode active material.

The total power (power consumption) required in the manufacturing of the positive electrode active material is "the sum of the power (power consumption) at the first shear rate and the power (power consumption) at the second shear rate." For example, the total power (power consumption) required for manufacturing the positive electrode active material of Example 3 is "the sum of the power (power consumption) at the first shear rate ($2300 \, s^{-1}$) and the power (power consumption) at the second shear rate ($7300 \, s^{-1}$)". The total power (power consumption) required in the manufacturing of the positive electrode active material according to Examples is shown in Tables 1 and 2.

Table 1

| Items (for $LiNi_{0.91}Co_{0.075}Al_{0.015}O_2$) | Total Power (Total Power Consumption) (Wh per 1 kg of Positive Electrode Active Material) |
|---|---|
| Example 1 | 74 |
| Example 2 | 89 |
| Example 3 | 322 |

Table 2

| Items (for $LiCoO_2$) | Total Power (Total Power Consumption) (Wh per 1 kg of Positive Electrode Active Material) |
|---|---|
| Example 4 | 54 |
| Example 5 | 64 |
| Example 6 | 107 |

Referring to FIG. 18 and Tables 1 and 2, it was confirmed that the positive electrode active materials according to Examples 1 to 6 can be produced even with a relatively low power consumption (50 Wh to 350 Wh per kilogram of the positive electrode active material produced)). For example, it was confirmed that by using the manufacturing method according to the present disclosure, it may produce a positive electrode active material without damage and wear of the surface of the lithium transition metal composite oxide while forming a carbon coating layer on the surface of the lithium transition metal composite oxide with appropriate or suitable power consumption.

**Evaluation Example 4: Performance Evaluation of Rechargeable lithium battery**

Capacity, charge-discharge efficiency, and high-temperature lifetime characteristics of a rechargeable lithium battery including any one of the positive electrode active materials according to Examples and Comparative Examples were evaluated.

The coin cells according to Examples 1 to 3 and Comparative Example 1 were each initially charged to 4.3 V at a constant current (0.2 C), rested for 10 minutes, and then discharged to 3.0 V at a constant current (0.2 C) to proceed with initial charging and discharging. The charge-discharge efficiency was calculated by the ratio of the initial discharge capacity to the initial charge capacity. Thereafter, a cycle of charging to 4.4 V at 45°C under a constant current (0.33 C) condition and discharging to 3 V under a constant current (1.0 C) condition was repeated up to 50 times. The high temperature lifetime characteristics was evaluated by the ratio of the discharge capacity at 50th cycles to the discharge capacity at 1st cycle.

The coin cells according to Examples 4 to 6 and Comparative Example 2 were each initially charged to 4.55 V at a constant current (0.2 C), rested for 10 minutes, and then discharged to 3.0 V under a constant current (0.2 C) condition to proceed with initial charging and discharging. The charge-discharge efficiency was calculated by the ratio of the initial discharge capacity to the initial charge capacity. Thereafter, a cycle of charging to 4.56 V at 45°C under a constant current (0.35 C) condition and discharging to 3.0 V under a constant current (0.35C) condition was repeated up to 30 times. The high temperature lifetime characteristics was evaluated by the ratio of the discharge capacity at 30th cycles to the discharge capacity at 1st cycle.

The results are shown in Table 3 and Table 4.

Table 3

| Items | Charge Capacity (mAh/g) | Discharge Capacity (mAh/g) | Charge-Discharge Efficiency (%) | High Temperature Lifetime (%) |
|---|---|---|---|---|
| Example 1 | 241.6 | 210.4 | 87.1 | 96.5 |
| Example 2 | 241.8 | 210.8 | 87.2 | 96.6 |
| Example 3 | 241.4 | 211.6 | 87.6 | 96.0 |
| Comparative Example 1 | 241.6 | 210.4 | 87.1 | 95.6 |

Table 4

| Items | Charge Capacity (mAh/g) | Discharge Capacity (mAh/g) | Charge-Discharge Efficiency (%) | High Temperature Lifetime (%) |
|---|---|---|---|---|
| Example 4 | 206.0 | 189.2 | 91.8 | 95.7 |
| Example 5 | 206.0 | 188.5 | 91.5 | 95.4 |
| Example 6 | 206.3 | 189.5 | 91.9 | 94.8 |
| Comparative Example 2 | 205.6 | 188.9 | 91.9 | 94.2 |

Referring to Table 3 and Table 4, the rechargeable lithium batteries including any one of the positive electrode active materials according to Examples 1 to 6 had excellent (enhanced/suitable) capacity, charge-discharge efficiency, and high-temperature lifetime characteristics. In particular, it was confirmed that the rechargeable lithium batteries including Examples 1 to 3 in each of which charging and discharging was performed up to 50 times were each superior in high-temperature lifetime characteristics compared to the rechargeable lithium battery including Comparative Example 1, and the rechargeable lithium battery including Comparative Example 1 performed so poorly that it became unusable when charging and discharge were performed 200 times or more. In addition, it was confirmed that the rechargeable lithium batteries including Examples 4 to 6 in each of which charging and discharging was performed up to 30 times were each superior in high-temperature lifetime characteristics compared to the rechargeable lithium battery including Comparative Example 2, and the rechargeable lithium battery including Comparative Example 2 performed so poorly that it became unusable when charging and discharge were performed 200 times or more. It was confirmed that the positive electrode active materials according to Comparative Examples 1 and 2 did not have a carbon coating layer without damage and wear, and thus did not exhibit high-temperature lifetime characteristics as good as the rechargeable lithium batteries including Examples 1 to 6.

Thus, it was confirmed that each of the positive electrode active materials according to Examples 1 to 6 included the carbon coating layer, and the surface thereof was not damaged and worn, so that they improved the conductivity of the positive electrode and enhanced the capacity, charge-discharge efficiency, and high-temperature lifetime characteristics of the rechargeable lithium battery. In addition, because each of the positive electrode active materials according to Examples 1 to 6 including the carbon coating layer results in the positive electrode with a high mixture density, which allows the rechargeable lithium battery to have an excellent or suitable energy density.

The method for manufacturing a positive electrode active material according to one or more embodiments of the present disclosure may manufacture a positive electrode active material by consuming relatively little/low power (power consumption) while minimizing or reducing damage and wear of the positive electrode active material. In addition, the process may be simplified, the time desired or required for the process may be shortened, and the positive electrode active material may be economically manufactured. Thus, the positive electrode active material may be mass-produced. For example, by controlling the shear rates during the first and second mixing processes, the method reduces mechanical stress on the active material particles, thereby reducing surface damage and wear. Additionally, the process is simplified and time-efficient, making it suitable for cost-effective and scalable mass production of positive electrode active materials.

The positive electrode according to one or more embodiments of the present disclosure may have excellent or suitable conductivity and high mixture density.

The rechargeable lithium battery according to one or more embodiments of the present disclosure may have excellent or suitable energy density, capacity, charge-discharge efficiency, and high-temperature lifetime characteristics.

In the present disclosure, expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

In the context of the present disclosure and unless otherwise defined, the terms "use," "using," and "used" may be considered synonymous with the terms "utilize," "utilizing," and "utilized," respectively.

In present disclosure, the term "Group" as utilized herein refers to a group of the Periodic Table of Elements according to the 1 to 18 grouping system of the International Union of Pure and Applied Chemistry ("IUPAC").

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value. Also, it should be understood that, even if the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery manufacturing device, a battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While the present disclosure has been described with reference to example embodiments, it should be understood that these embodiments are provided for illustrative purposes only and do not limit the scope of the present disclosure. Various modifications and equivalent arrangements may be made without departing from the scope of the appended claims and equivalents thereof. Accordingly, the described embodiments should be regarded as examples rather than limitations of the present disclosure. It is further understood that the scope of the present disclosure is defined by the appended claims and equivalents thereof rather than the detailed description described above, and all modifications and alterations derived from the claims and their equivalents fall within the scope of the present disclosure.

Embodiments are set out in the following clauses:

Clause 1. A method for manufacturing a positive electrode active material, the method comprising: (a) performing a first mixing process at a first shear rate to form a mixture of a lithium transition metal composite oxide and a graphene; and (b) performing a second mixing process at a second shear rate on the mixture, wherein, (i) the first and the second mixing processes are each performed utilizing a mixer comprising a press head and a rotating chamber, (ii) the second shear rate is greater than the first shear rate, (iii) the first shear rate is defined by Equation 1, and (iv) the second shear rate is defined by Equation 2:

## Equation 1

$$\text{the first shear rate (s}^{-1}) = \text{a first rotational speed of the rotating chamber / a first gap}$$

wherein, in the Equation 1:

- the first rotational speed is 1,000 mm/s to 6,000 mm/s, and
- the first gap is a first clearance space between the press head and an inner wall of the rotating chamber, and is greater than 0 mm and less than or equal to 1 cm; and

$$\text{the second shear rate (s}^{-1}) = \text{a second rotational speed of the rotating chamber / a second gap} \qquad \text{Equation 2}$$

wherein, in the Equation 2:

- the second rotational speed is 4,000 mm/s to 18,000 mm/s, and
- the second gap is a second clearance space between the press head and the inner wall of the rotating chamber, and is greater than 0 mm and less than or equal to 1 cm.

Clause 2. The method of Clause 1, wherein a ratio of the first shear rate to the second shear rate is 1:1.2 to 1:3.5.

Clause 3. The method of Clause 1 or Clause 2, wherein the graphene comprises reduced graphene oxide.

Clause 4. The method of any preceding Clause, wherein a weight ratio of the lithium transition metal composite oxide to the graphene is 99:1 to 99.99:0.01.

Clause 5. The method of any preceding Clause, wherein the first mixing process is performed for 0.5 minutes to 5 minutes.

Clause 6. The method of any preceding Clause, wherein the second mixing process is performed for 5 minutes to 20 minutes.

Clause 7. The method of any preceding Clause, wherein the press head has a diameter of 10 mm to 2,000 mm.

Clause 8. The method of any preceding Clause, wherein the first mixing process and the second mixing process are each a dry process.

Clause 9. The method of any preceding Clause, wherein the first mixing process and the second mixing process require a power of 350 Wh or less per kilogram of the positive electrode active material produced.

Clause 10. The method of any preceding Clause, wherein the mixer comprises a mechanofusion.

Clause 11. A positive electrode active material, comprising: a core comprising a lithium transition metal composite oxide; and a carbon coating layer on a surface of the core, wherein the positive active electrode material is manufactured by the method of any one of Clauses 1 to 10.

Clause 12. The positive electrode active material of Clause 11, wherein the lithium transition metal composite oxide is a lithium nickel-based oxide, a lithium cobalt-based oxide, a lithium manganese-based oxide, a lithium iron phosphate-based compound, a cobalt-free lithium nickel-manganese-based oxide, or a combination thereof.

Clause 13. The positive electrode active material of Clause 11 or Clause 12, wherein the carbon coating layer comprises reduced graphene oxide.

Clause 14. The positive electrode active material of any one of Clauses 11 to 13, wherein the carbon coating layer comprises a graphene having a lateral size of 0.1 $\mu$m to 1000 $\mu$m and a thickness of 1 nm or less.

Clause 15. The positive electrode active material of any one of Clauses 11 to 14, wherein an amount of the carbon coating layer is 0.01 wt% to 1 wt% based on a total weight of 100 wt% of the positive electrode active material.

Clause 16. The positive electrode active material of any one of Clauses 11 to 15, wherein the carbon coating layer has a thickness of about 0.1 nm to about 50 nm.

Clause 17. The positive electrode active material of any one of Clauses 11 to 16, wherein the positive electrode active material comprises at least one of a large particle or a small particle.

Clause 18. A rechargeable lithium battery, comprising: a positive electrode; a negative electrode; and a separator between the positive electrode and the negative electrode, wherein the positive electrode comprises a current collector and a positive electrode active material layer on the current collector, and wherein the positive electrode active material layer comprises the positive electrode active material of any one of Clauses 11 to 17.

Clause 19. The rechargeable lithium battery of Clause 18, wherein the positive electrode active material layer further comprises a conductive material, and wherein a weight ratio of the conductive material to the positive electrode active material is 1/99.5 to 1/97.

Clause 20. The rechargeable lithium battery of Clause 18 or Clause 19, wherein a mixture density of the positive electrode is 3.0 g/cc to 5.0 g/cc.

## Claims

1. A method for manufacturing a positive electrode active material, the method comprising:

performing a first mixing process at a first shear rate to form a mixture of a lithium transition metal composite oxide and a graphene; and
performing a second mixing process at a second shear rate on the mixture,
wherein,
the first and the second mixing processes are each performed utilizing a mixer comprising a press head and a rotating chamber,
the second shear rate is greater than the first shear rate,
the first shear rate is defined by Equation 1, and
the second shear rate is defined by Equation 2:

the first shear rate ($s^{-1}$) = a first rotational speed of the rotating chamber / a first gap,  Equation 1

wherein, in the Equation 1,

the first rotational speed is 1,000 mm/s to 6,000 mm/s, and
the first gap is a first clearance space between the press head and an inner wall of the rotating chamber, and is greater than 0 mm and less than or equal to 1 cm; and the second shear rate ($s^{-1}$) = a second rotational speed of the rotating chamber / a second gap,  Equation 2

wherein, in the Equation 2,

the second rotational speed is 4,000 mm/s to 18,000 mm/s, and

the second gap is a second clearance space between the press head and the inner wall of the rotating chamber, and is greater than 0 mm and less than or equal to 1 cm.

2. The method as claimed in Claim 1, wherein (a) a ratio of the first shear rate to the second shear rate is 1:1.2 to 1:3.5, and/or (b) the graphene comprises reduced graphene oxide.

3. The method as claimed in any preceding Claim, wherein a weight ratio of the lithium transition metal composite oxide to the graphene is 99:1 to 99.99:0.01.

4. The method as claimed in any preceding Claim, wherein (a) the first mixing process is performed for 0.5 minutes to 5 minutes, and/or (b) the second mixing process is performed for 5 minutes to 20 minutes, and/or (c) the first mixing process and the second mixing process are each a dry process.

5. The method as claimed in any preceding Claim, wherein the press head has a diameter of 10 mm to 2,000 mm.

6. The method as claimed in any preceding Claim, wherein the first mixing process and the second mixing process require a power of 350 Wh or less per kilogram of the positive electrode active material produced.

7. The method as claimed in any preceding Claim, wherein the mixer comprises a mechanofusion.

8. A positive electrode active material, comprising:

   a core comprising a lithium transition metal composite oxide; and
   a carbon coating layer on a surface of the core,
   wherein the positive active electrode material is manufactured by the method of any one of Claims 1 to 7.

9. The positive electrode active material as claimed in Claim 8, wherein the lithium transition metal composite oxide is a lithium nickel-based oxide, a lithium cobalt-based oxide, a lithium manganese-based oxide, a lithium iron phosphate-based compound, a cobalt-free lithium nickel-manganese-based oxide, or a combination thereof.

10. The positive electrode active material as claimed in Claim 8 or Claim 9, wherein (a) the carbon coating layer comprises reduced graphene oxide, and/or (b) the carbon coating layer comprises a graphene having a lateral size of 0.1 $\mu$m to 1000 $\mu$m and a thickness of 1 nm or less.

11. The positive electrode active material as claimed in any one of Claims 8 to 10, wherein (a) an amount of the carbon coating layer is 0.01 wt% to 1 wt% based on a total weight of 100 wt% of the positive electrode active material, and/or (b) the carbon coating layer has a thickness of about 0.1 nm to about 50 nm.

12. The positive electrode active material as claimed in any one of Claims 8 to 11, wherein the positive electrode active material comprises at least one of a large particle or a small particle.

13. A rechargeable lithium battery, comprising:

   a positive electrode;
   a negative electrode; and
   a separator between the positive electrode and the negative electrode,
   wherein the positive electrode comprises a current collector and a positive electrode active material layer on the current collector, and
   wherein the positive electrode active material layer comprises the positive electrode active material as claimed in any one of Claims 8 to 12.

14. The rechargeable lithium battery as claimed in Claim 13, wherein the positive electrode active material layer further comprises a conductive material, and
   wherein a weight ratio of the conductive material to the positive electrode active material is 1/99.5 to 1/97.

15. The rechargeable lithium battery as claimed in Claim 13 or Claim 14, wherein a mixture density of the positive electrode is 3.0 g/cc to 5.0 g/cc.

# FIG. 1

# FIG. 2

FIG. 3

# FIG. 4

100

50

72

40

71

10 30 20

# FIG. 5

# FIG. 6

# FIG. 7

# FIG. 8

PC

COR1

CTL1

# FIG. 9

PC

# FIG. 10

SP

# FIG. 11

| | |
|---|---|
| Preparing a lithium transition metal composite oxide | ~S100 |
| Performing a first mixing of the lithium transition metal composite oxide and graphene | ~S320 |
| Performing a second mixing of the mixture | ~S340 |
| Forming a slurry | ~S500 |
| Applying the slurry on a current collector, drying, and rolling | ~S700 |

# FIG. 12

S320

# FIG. 13

S340

GAP

$D_R$

$F_C$

SCR SFT

RTC

PRH

MXR

AM

FIG. 14

S500

BND

CDM

AM

SVT

# FIG. 15

S700

# FIG. 16

S4800 5.0kV 7.4mm x10.0k SE(M)     5.00um

# FIG. 17

S4800 5.0kV 8.3mm x10.0k SE(M)          5.00um

# FIG. 18

Europäisches
Patentamt

European
Patent Office

Office européen
des brevets

# EUROPEAN SEARCH REPORT

**Application Number**

EP 25 21 8487

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/225789 A1 (UNIV NORTHWESTERN [US]) 11 November 2021 (2021-11-11) | 8-15 | INV. H01M4/1391 |
| A | * claims 21-45 * <br> * table 1 * <br> * figures 2C,5A,9B * | 1-7 | H01M4/04 H01M4/36 H01M4/62 |
| X | EP 4 199 144 A1 (LG ENERGY SOLUTION LTD [KR]) 21 June 2023 (2023-06-21) | 8-15 | ADD. H01M4/02 |
| A | * claims 1-16 * <br> * paragraphs [0079] - [0083] * <br> * example 1 * | 1-7 | H01M4/525 |
| X | EP 3 761 410 A1 (LG CHEMICAL LTD [KR]) 6 January 2021 (2021-01-06) | 8-15 | |
| A | * claims 1-17 * <br> * paragraphs [0022] - [0028] * | 1-7 | |
| X | EP 4 216 307 A1 (LG ENERGY SOLUTION LTD [KR]) 26 July 2023 (2023-07-26) | 8-15 | |
| A | * claims 1-15 * <br> * paragraphs [0045], [0047], [0056], [0057], [0065] * | 1-7 | **TECHNICAL FIELDS SEARCHED (IPC)** <br> H01M |
| X | US 2019/372100 A1 (ZHAMU ARUNA [US] ET AL) 5 December 2019 (2019-12-05) | 8-15 | |
| A | * claims 1-27 * <br> * paragraph [0141] * | 1-7 | |
| A | KR 2016 0075465 A (POSCO CHEMTECH CO LTD [KR]) 29 June 2016 (2016-06-29) <br> * claims 1-6 * <br> * paragraphs [0037] - [0044] * | 1-15 | |
| A | WO 2024/102624 A2 (NOVONIX BATTERY TECH SOLUTIONS INC [CA]; NOVONIX ANODE MAT LLC [US]) 16 May 2024 (2024-05-16) <br> * claims 1-14 * <br> * page 14, lines 14-23 * | 1-15 | |

-/--

The present search report has been drawn up for all claims

| Place of search | Date of completion of the search | Examiner |
|---|---|---|
| Munich | 28 March 2026 | Haering, Christian |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

Europäisches
Patentamt

European
Patent Office

Office européen
des brevets

## EUROPEAN SEARCH REPORT

**Application Number**

**EP 25 21 8487**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CA 2 754 372 A1 (HYDRO QUEBEC [CA]; SEI CORP [JP]) 4 April 2013 (2013-04-04) * claims 1-14 * * page 14, line 3 - page 15, line 5 * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 28 March 2026 | Haering, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 8487

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2026

| Patent document cited in search report | | Publication date | Patent family member(s) | | Publication date |
|---|---|---|---|---|---|
| WO 2021225789 | A1 | 11-11-2021 | CN | 115485882 A | 16-12-2022 |
| | | | EP | 4147284 A1 | 15-03-2023 |
| | | | JP | 7654690 B2 | 01-04-2025 |
| | | | JP | 2023525709 A | 19-06-2023 |
| | | | KR | 20230005340 A | 09-01-2023 |
| | | | US | 2023187615 A1 | 15-06-2023 |
| | | | WO | 2021225789 A1 | 11-11-2021 |
| EP 4199144 | A1 | 21-06-2023 | CN | 115989600 A | 18-04-2023 |
| | | | EP | 4199144 A1 | 21-06-2023 |
| | | | JP | 7642796 B2 | 10-03-2025 |
| | | | JP | 2023540077 A | 21-09-2023 |
| | | | KR | 20220074790 A | 03-06-2022 |
| | | | US | 2023339777 A1 | 26-10-2023 |
| | | | WO | 2022114872 A1 | 02-06-2022 |
| EP 3761410 | A1 | 06-01-2021 | CN | 111937191 A | 13-11-2020 |
| | | | EP | 3761410 A1 | 06-01-2021 |
| | | | KR | 20190117279 A | 16-10-2019 |
| | | | US | 2021013511 A1 | 14-01-2021 |
| | | | WO | 2019194613 A1 | 10-10-2019 |
| EP 4216307 | A1 | 26-07-2023 | CN | 116438677 A | 14-07-2023 |
| | | | EP | 4216307 A1 | 26-07-2023 |
| | | | JP | 7717798 B2 | 04-08-2025 |
| | | | JP | 2023545293 A | 27-10-2023 |
| | | | KR | 20220090461 A | 29-06-2022 |
| | | | US | 2023387384 A1 | 30-11-2023 |
| | | | WO | 2022139452 A1 | 30-06-2022 |
| US 2019372100 | A1 | 05-12-2019 | NONE | | |
| KR 20160075465 | A | 29-06-2016 | NONE | | |
| WO 2024102624 | A2 | 16-05-2024 | CN | 120303787 A | 11-07-2025 |
| | | | EP | 4616457 A2 | 17-09-2025 |
| | | | JP | 2025536429 A | 05-11-2025 |
| | | | KR | 20250105438 A | 08-07-2025 |
| | | | WO | 2024102624 A2 | 16-05-2024 |
| CA 2754372 | A1 | 04-04-2013 | CA | 2754372 A1 | 04-04-2013 |
| | | | CA | 2849008 A1 | 11-04-2013 |
| | | | CN | 103918109 A | 09-07-2014 |
| | | | CN | 108511674 A | 07-09-2018 |
| | | | EP | 2764564 A1 | 13-08-2014 |
| | | | ES | 2674334 T3 | 28-06-2018 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 21 8487

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2026

| Patent document cited in search report | Publication date | Patent family member(s) | | Publication date |
|---|---|---|---|---|
| | | JP | 6321541 B2 | 09-05-2018 |
| | | JP | 2014532263 A | 04-12-2014 |
| | | KR | 20140082988 A | 03-07-2014 |
| | | US | 2015037673 A1 | 05-02-2015 |
| | | US | 2017125813 A1 | 04-05-2017 |
| | | US | 2018287155 A1 | 04-10-2018 |
| | | US | 2021066718 A1 | 04-03-2021 |
| | | WO | 2013049939 A1 | 11-04-2013 |

EPO FORM P0459

For more details about this annex : see Official Journal of the European Patent Office, No. 12/82

page 2 of 2